(19) Europäisches Patentamt / European Patent Office / Office européen des brevets

(11) **EP 2 245 818 B1**

(12) **FASCICULE DE BREVET EUROPEEN**

(45) Date de publication et mention de la délivrance du brevet:
**04.04.2018 Bulletin 2018/14**

(21) Numéro de dépôt: **09712097.6**

(22) Date de dépôt: **18.02.2009**

(51) Int Cl.:
***H04L 27/34*** *(2006.01)*

(86) Numéro de dépôt international:
**PCT/EP2009/051939**

(87) Numéro de publication internationale:
**WO 2009/103746 (27.08.2009 Gazette 2009/35)**

(54) **MODULATION CODEE AVEC ENTRELACEMENT DES VOIES I ET Q ET ROTATION OPTIMISEE**

CODIERTE MODULATION MIT VERSCHACHTELUNG DER I- UND Q-PFADE UND OPTIMIERTER ROTATION

CODED MODULATION WITH INTERLEAVING OF THE I AND Q PATHWAYS AND OPTIMIZED ROTATION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.02.2008 FR 0851048**

(43) Date de publication de la demande:
**03.11.2010 Bulletin 2010/44**

(73) Titulaire: **Groupe des Ecoles des Telecommunications/ Ecole Nationale Superieure de Telecommunications De Bretagne 29238 Brest Cedex 3 (FR)**

(72) Inventeurs:
• **DOUILLARD, Catherine F-29200 Brest (FR)**
• **ABDEL NOUR, Charbel F-29200 Brest (FR)**

(74) Mandataire: **Vidon Brevets & Stratégie 16B, rue de Jouanet B.P. 90333 Technopole Atalante 35703 Rennes Cedex 7 (FR)**

(56) Documents cités:
• **CHARBEL ABDEL NOUR ET AL: "Improving BICM performance of QAM constellations for broadcasting applications" TURBO CODES AND RELATED TOPICS, 2008 5TH INTERNATIONAL SYMPOSIUM ON, IEEE, PISCATAWAY, NJ, USA, 1 septembre 2008 (2008-09-01), pages 55-60, XP031353662 ISBN: 978-1-4244-2862-5**
• **KIYANI N F ET AL: "OFDM with BICM-ID and Rotated MPSK Constellations and Signal Space Diversity" COMMUNICATIONS AND VEHICULAR TECHNOLOGY IN THE BENELUX, 2007 14TH IEEE SYMPOSIUM ON, IEEE, PISCATAWAY, NJ, USA, 15 novembre 2007 (2007-11-15), pages 1-4, XP031263345 ISBN: 978-1-4244-1369-0**
• **AIK CHINDAPOL ET AL: "Bit-interleaved coded modulation with signal space diversity in Rayleigh fading" SIGNALS, SYSTEMS, AND COMPUTERS, 1999. CONFERENCE RECORD OF THE THIRTY 19991024; 19991024 - 19991027 PISCATAWAY, NJ, USA,IEEE, US, vol. 2, 24 octobre 1999 (1999-10-24), pages 1003-1007, XP010373787 ISBN: 978-0-7803-5700-6**
• **CHARBEL ABDEL NOUR ET AL: "CTH11-4: On Lowering the Error Floor of High Order Turbo BICM Schemes Over Fading Channels" GLOBAL TELECOMMUNICATIONS CONFERENCE, 2006. GLOBECOM '06. IEEE, IEEE, PI, 1 novembre 2006 (2006-11-01), pages 1-5, XP031075098**

**Description**

**1. Domaine de l'invention**

Le domaine de l'invention est celui de la transmission de signaux numériques, notamment via des canaux de transmission de type non gaussien.

Plus précisément, l'invention concerne l'amélioration de la modulation de tels signaux, notamment dans le cas de canaux de transmission présentant des phénomènes d'évanouissement et/ou d'effacement.

**2. Art antérieur**

*2.1 Modulation codée de type «BICM» (« Bit-Interleaved Coded Modulation » en anglais, pour « Modulation codée à entrelacement bit »)*

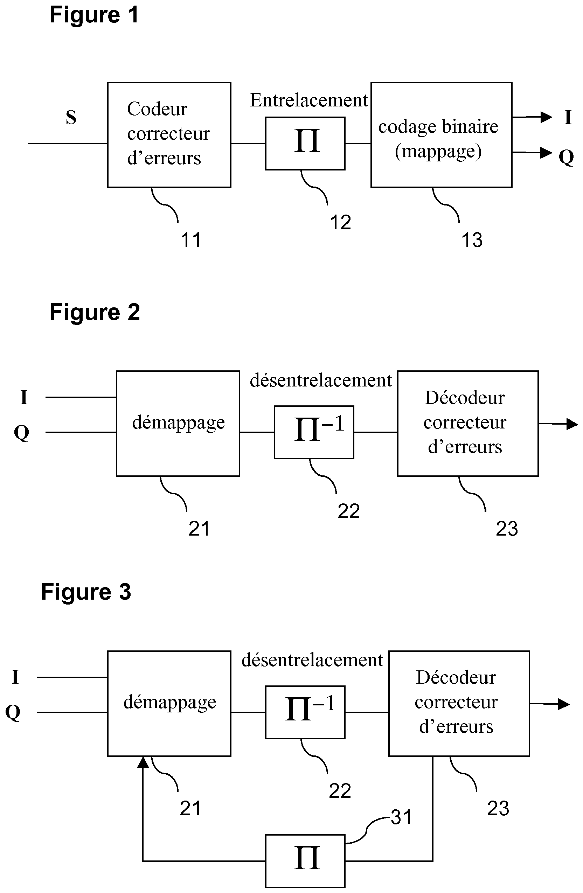

Le schéma de principe de cette modulation codée est illustré en figure 1, et associe classiquement un code correcteur d'erreurs 11, une fonction d'entrelacement de bits 12 et un codage binaire de signal 13, encore appelé fonction de « mapping » ou mappage.

Cette modulation codée transforme un signal source reçu en entrée S en deux composantes I et Q en sortie, vers le canal de transmission.

Cette modulation codée BICM est particulièrement bien adaptée à la transmission des données sur des canaux non gaussiens, présentant notamment des phénomènes d'évanouissement de l'information (appelés en anglais « fading channel »).

La figure 2 illustre le schéma de principe de la démodulation correspondant à cette modulation codée BICM, comprenant une fonction de démappage (« demapping ») 21, ou d'estimation pondérée des bits reçus, une fonction de désentrelacement 22 et un décodeur correcteur d'erreurs 23.

Afin d'améliorer les performances de la démodulation, un processus itératif 31 (appelée démodulation « ID » pour « Itérative Démodulation » en anglais) peut être mis en place entre le décodeur correcteur d'erreurs et la fonction de démappage, comme illustré en figure 3. Cette boucle itérative 31 permet d'obtenir des gains en performance de démodulation, qui dépendent du type de code correcteur d'erreurs utilisé, du type de modulation mise en oeuvre, de la fonction de mappage utilisée lors de la modulation, du rendement de codage et/ou de la taille des trames d'information transmise.

*2.1 Inconvénients de la modulation codée de type « BICM »*

Un inconvénient de cette technique de modulation codée « BICM » précédemment décrite réside dans le fait que les deux composantes I et Q sont soumises au même évanouissement et/ou au même effacement. Ainsi, dans le cas de canal à évanouissement, celui-ci affecte les deux composantes de la même façon, et dans le cas de canal à effacements, les deux composantes sont effacées.

KIYANI N F ET AL: "OFDM with BICM-ID and Rotated MPSK Constellations and Signal Space Diversity", XP031263345, constitue l'état de la technique le plus proche, en ce qu'il révèle aussi un système BICM avec entrelacement des voies I et Q, ainsi qu'une rotation de la constellation.

**3. Objectifs de l'invention**

L'invention a notamment pour objectif de pallier ces inconvénients de l'art antérieur.

Plus précisément, un objectif de l'invention, selon au moins un mode de réalisation, est d'améliorer les performances de modulation notamment dans le cas de canaux présentant à la fois des phénomènes d'évanouissement et/ou d'effacement.

Un autre objectif de l'invention, selon au moins un mode de réalisation, est de fournir une telle technique de modulation simple et peu coûteuse à mettre en oeuvre.

**4. Exposé de l'invention**

L'invention propose une solution nouvelle qui ne présente pas l'ensemble de ces inconvénients de l'art antérieur, sous la forme d'un procédé de transmission d'un signal représentatif d'un signal source, destiné à être transmis via un canal de transmission, comprenant les étapes suivantes :

-    application d'un code correcteur d'erreurs sur ledit signal source, délivrant un signal numérique intermédiaire ;

- entrelacement des bits dudit signal numérique intermédiaire, délivrant un signal entrelacé ;
- application d'un codage binaire de signal, noté mappage, sur ledit signal entrelacé, délivrant le signal à transmettre, mettant en oeuvre une constellation de modulation comprenant des composantes I et Q,
- application d'un entrelacement d'une desdites composantes I ou Q par rapport à l'autre.

Selon l'invention, un tel procédé comprend, avant ladite étape d'application d'un entrelacement, une étape d'application d'une rotation à ladite constellation de modulation, délivrant un mappage de la projection de la constellation tournée, dit mappage projeté, ladite rotation étant mise en oeuvre selon un angle dont la valeur est définie selon les deux phases suivantes :

- une première phase de détermination d'au moins une plage de valeurs d'angle, en fonction d'un premier critère ;
- une deuxième phase de sélection d'au moins une valeur dans la ou lesdites plages, en fonction d'un second critère,

l'un desdits critères étant que ledit mappage projeté sur chaque composante I et Q soit proche d'un mappage de Gray, pour chaque point dudit mappage projeté, et l'autre desdits critères tenant compte des valeurs de la distance produit minimale entre deux points dudit mappage projeté et/ou de la distance euclidienne minimale entre deux projections sur l'une ou l'autre des composantes I ou Q desdits deux points, notée distance euclidienne minimale unidimensionnelle.

Ainsi, l'invention repose sur une approche nouvelle et inventive de la modulation d'un signal, comprenant l'application d'une rotation à la constellation de modulation, selon un angle dont la valeur est définie suivant une méthode expérimentale, tenant compte notamment de paramètres tels que le canal de transmission, le code correcteur d'erreurs, la modulation, l'utilisation de la démodulation itérative, etc.

En effet, contrairement aux valeurs d'angle connues de l'homme du métier et déterminées de manière théorique, le procédé selon l'invention met en oeuvre une méthode expérimentale de détermination de la valeur d'angle, afin d'optimiser les performances de la modulation.

L'entrelacement appliqué ensuite sur une des composantes I ou Q par rapport à l'autre permet de séparer les deux composantes pendant la transmission afin qu'elles ne soient pas soumises au même effacement ou à la même atténuation.

Selon un mode de réalisation particulier de l'invention, cet entrelacement correspond à un simple retard, ou décalage entre les deux composantes.

Ainsi, la détermination d'une valeur d'angle optimale s'effectue en deux phases, la première délivrant une ou plusieurs plages de valeurs d'angle, en fonction d'un premier critère, et la deuxième sélectionnant au moins une valeur dans cette ou ces plages, en fonction d'un second critère, ces critères pouvant être utilisés indifféremment pour l'une ou l'autre de ces deux phases.

Selon une caractéristique particulière de l'invention, ladite première phase détermine au moins une plage de valeurs d'angle, de façon que ledit mappage projeté sur chaque composante I et Q soit proche d'un mappage de Gray, pour chaque point dudit mappage projeté et ladite deuxième phase sélectionne au moins une valeur dans la ou lesdites plages, en fonction des valeurs de la distance produit minimale entre deux points dudit mappage projeté et/ou de la distance euclidienne minimale entre deux projections sur l'une ou l'autre des composantes I ou Q desdits deux points, notée distance euclidienne minimale unidimensionnelle.

La première phase est basée sur un critère consistant à rechercher l'obtention d'un mappage projeté le plus proche possible d'un mappage de Gray, afin de minimiser le taux d'erreurs binaires en sortie de la fonction de démappage.

La deuxième phase est basée sur l'analyse de valeurs de distances particulières, afin de sélectionner une ou plusieurs valeurs d'angle optimales dans la ou les plages de valeurs déterminées lors de la première phase.

La première valeur analysée correspond à une distance produit minimale entre les deux points du mappage projeté considérés précédemment. Cette distance donne notamment des informations sur le comportement de la fonction de démappage à faible taux d'erreurs, vis à vis des évanouissements.

La deuxième valeur de distance analysée correspond à une distance euclidienne minimale unidimensionnelle, c'est-à-dire une distance euclidienne minimale entre deux projections sur l'une ou l'autre des composantes I ou Q de deux points du mappage projeté. Cette distance donne notamment une information sur le comportement de la fonction de démappage à faible taux d'erreurs, vis à vis des effacements.

Selon les modulations, l'une ou l'autre de ces distances, ou les deux, sont analysées dans la deuxième phase de détermination d'un angle optimal.

Ainsi, selon une caractéristique particulière de l'invention, ladite première phase minimise, sur une composante dudit mappage projeté, un nombre moyen de bits différents entre deux points voisins dudit mappage projeté et/ou un nombre de bits différents entre deux points dudit mappage projeté situés à ladite distante distance euclidienne minimale unidimensionnelle.

On sélectionne ainsi une ou plusieurs plages de valeurs pour l'angle de rotation correspondant à des valeurs faibles de l'une et/ou l'autre de ces deux grandeurs.

Selon un aspect particulier de l'invention, ladite seconde phase écarte au moins un angle minimisant ladite distance euclidienne minimale unidimensionnelle et/ou ladite distance produit.

Ainsi, la seconde phase permet non seulement de sélectionner une ou plusieurs valeurs d'angle optimales, à partir de la ou les plages délivrées lors de la première phase, mais aussi d'écarter certaines valeurs d'angle à éviter, et notamment des valeurs d'angle qui correspondent à des valeurs minimales locales de l'une ou l'autre des distances analysées.

Selon un mode de réalisation particulier de l'invention, la valeur dudit angle tient compte également d'au moins un critère appartenant au groupe comprenant :

- le code correcteur d'erreurs utilisé ;
- la modulation utilisée ;
- le canal de transmission ;
- le codage binaire de signal utilisé ;
- le rendement de codage ;
- la taille des trames du signal transmis ;
- la constellation choisie pour la modulation utilisée.

Ainsi, la détermination d'une valeur d'angle optimale pour la rotation de la constellation est basée sur un certain nombre de paramètres, permettant une optimisation des performances de modulation dans de nombreux cas réels de transmission, et pas seulement dans des cas théoriques, comme dans l'art antérieur.

De plus, la modulation appartient au groupe comprenant :

- les modulations de type QAM ;
- les modulations de type PSK ;
- les modulations de type APSK.

Ainsi, l'invention s'applique pour tous les types de modulation, QAM, QPSK, APSK, etc.

Selon un mode de réalisation particulier de l'invention, ladite valeur de l'angle est comprise entre 14,1° et 17,1°, lorsque la modulation utilisée est de type 16 QAM.

En particulier, la valeur de l'angle est égale à environ 16,8°, lorsque la modulation utilisée est de type 16 QAM.

Selon un autre mode de réalisation particulier de l'invention, ladite valeur de l'angle appartient à l'une desdites plages de valeurs :

- [7,1°-7,9°] ;
- [8,3°-9,2°] ;
- [9,7°-11,0°],

lorsque la modulation utilisée est de type 64 QAM.

En particulier, la valeur de l'angle est égale à comprise entre 8,6° et 8,7°, lorsque la modulation utilisée est de type 64 QAM.

Selon encore un autre mode de réalisation particulier de l'invention, ladite valeur de l'angle appartient à l'une desdites plage de valeurs appartient à l'une desdites plage de valeurs :

- [3,5°-3,7°] ;
- [3,9°-4,0°] ;
- [4,2°-4,3°] ;
- [4,5°-5,1°] ;
- [42,8°-43,2°],

lorsque la modulation utilisée est de type 256 QAM.

En particulier, la valeur de l'angle est égale à 4,2°, lorsque la modulation utilisée est de type 256 QAM.

Lorsque la modulation utilisée est de type QPSK, ladite valeur de l'angle ladite valeur de l'angle est comprise entre 26,5° et 33,2°, lorsque la modulation utilisée est de type QPSK (encore appelée 4 QAM).

En particulier, la valeur de l'angle est égale à 29,0°, lorsque la modulation utilisée est de type QPSK.

Selon un aspect particulier de l'invention, ladite valeur de l'angle appartient à l'une desdites plages de valeurs :

- [49,9°-58,5°] ;
- [76,5°-85,1°],

lorsque la modulation utilisée est de type 8PSK.

En particulier, ladite valeur de l'angle est égale à 55,7° ou 79,3°, lorsque la modulation utilisée est de type 8PSK.

Selon une caractéristique particulière de l'invention, lorsque la modulation utilisée est de type 16-APSK, ladite valeur de l'angle appartient à la plage de valeurs [6,0°-12,5°] pour $\gamma$=3,15 et à la plage de valeurs [6,0°-11,9°] pour $\gamma$=2,57, où ledit paramètre $\gamma$ dépend du rendement de codage choisi.

En particulier, ladite valeur de l'angle est comprise entre 9,9° et 10,3°, lorsque la modulation utilisée est de type 16-APSK.

Lorsque la modulation utilisée est de type 32-APSK et les paramètres $\gamma$1 et y2, respectivement égaux à 2,84 et 5,27, où lesdits paramètres $\gamma$1 et $\gamma$2 dépendent du rendement de codage choisi, ladite valeur de l'angle appartient à la plage de valeurs [91,7°-95,0°].

En particulier, ladite valeur de l'angle est égale à 94,4°, lorsque la modulation utilisée est de type 32-APSK..

Selon un mode de réalisation particulier, ledit code correcteur d'erreurs appartient au groupe comprenant :

- un code LDPC ;
- un turbocode ;
- un code à décodage itératif.

L'invention concerne également un dispositif de transmission d'un signal représentatif d'un signal source, destiné à être transmis via un canal de transmission, comprenant :

- des moyens d'application d'un code correcteur d'erreurs sur ledit signal source, délivrant un signal numérique intermédiaire ;
- des moyens d'entrelacement des bits dudit signal numérique intermédiaire, délivrant un signal entrelacé ;
- des moyens d'application d'un codage binaire de signal, noté mappage, sur ledit signal entrelacé, délivrant le signal à transmettre, mettant en oeuvre une constellation de modulation comprenant des composantes I et Q ;
- des moyens d'application d'un entrelacement d'une desdites composantes I ou Q par rapport à l'autre.

Selon l'invention, un tel dispositif comprend des moyens d'application d'une rotation à ladite constellation de modulation, délivrant un mappage projeté, ladite rotation étant mise en oeuvre selon un angle dont la valeur est définie selon les deux phases suivantes :

- des premiers moyens de détermination d'au moins une plage de valeurs d'angle, en fonction d'un premier critère ;
- des deuxièmes moyens de sélection d'au moins une valeur dans la ou lesdites plages, en fonction d'un second critère,

l'un desdits critères étant que ledit mappage sur chaque composante I et Q soit proche d'un mappage de Gray, pour chaque point dudit mappage , et l'autre desdits critères tenant compte des valeurs de la distance produit minimale entre deux points dudit mappage et/ou de la distance euclidienne minimale entre deux projections sur l'une ou l'autre des composantes I ou Q desdits deux points, notée distance euclidienne minimale unidimensionnelle.

Un tel dispositif est notamment apte à mettre en oeuvre le procédé de transmission selon l'invention tel que décrit précédemment.

L'invention concerne encore un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de transmission de l'invention tel que décrit précédemment.

Enfin, l'invention concerne un signal représentatif d'un signal source, destiné à être transmis via un canal de transmission selon le procédé de transmission de l'invention tel que décrit précédemment.

## 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1 et 2, déjà commentées en préambule, illustrent respectivement les schémas de principe d'une modulation et d'une démodulation de type « BICM » ;
- la figure 3, également commentée en préambule, illustre le schéma de principe d'une démodulation de type « BICM » avec une boucle itérative ;
- la figure 4 illustre le schéma de principe de la modulation selon un mode de réalisation de l'invention ;

- la figure 5 illustre un schéma de principe d'une démodulation correspondant à la modulation selon un mode de réalisation de l'invention ;
- la figure 6 présente, pour une modulation 256-QAM, différents résultats de taux d'erreurs binaires en sortie d'une fonction de démappage classique sans rotation ($\alpha$ =0), et d'un démappage avec rotation, respectivement de valeur $\alpha = \alpha_2$ et $\alpha = \alpha_3$ ;
- la figure 7 présente différentes courbes, pour une modulation 64-QAM, correspondant à :

  - courbe 1 : nombre de bits différents, ou distance de Hamming, $d_{H,min}$, entre les deux points projetés situés à la distance euclidienne minimale unidimensionnelle $d_{min}1D$ ;
  - courbe 2 : nombre moyen de bits différents, ou distance de Hamming moyenne, $d_{H,moy}$, entre deux points voisins après projection sur une composante ;
  - courbe 3 : distance produit minimale, $d_\Pi$, entre deux points quelconques de la constellation ;
  - courbe 4 : distance euclidienne minimale unidimensionnelle $d_{min}1D$, entre deux points quelconques de la constellation après projection des points sur une des deux composantes, $I$ ou $Q$ ;

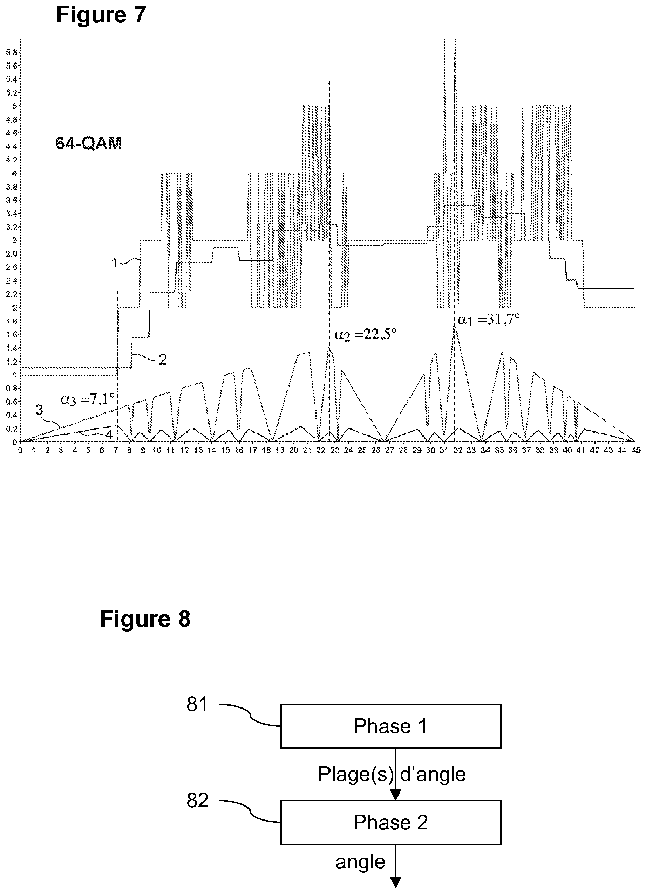

- la figure 8 présente les étapes de détermination d'une valeur d'angle selon un mode de réalisation de l'invention ;

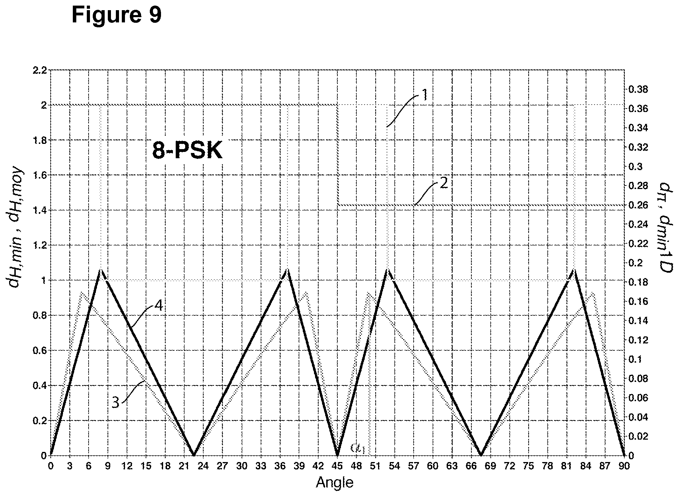

- la figure 9 présente différentes courbes, pour une modulation 8-PSK, et des valeurs d'angles comprises entre 0° et 90°, correspondant à :

  - courbe 1 : nombre de bits différents, ou distance de Hamming, $d_{H,min}$, entre les points projetés situés à la distance euclidienne minimale unidimensionnelle $d_{min}1D$ ;
  - courbe 2 : nombre moyen de bits différents, ou distance de Hamming moyenne, $d_{H,moy}$, entre deux points voisins après projection sur une composante ;
  - courbe 3 : distance produit minimale, $d_\Pi$, entre deux points quelconques de la constellation ;
  - courbe 4 : distance euclidienne minimale unidimensionnelle $d_{min}1D$, entre deux points quelconques de la constellation après projection des points sur une des deux composantes, $I$ ou $Q$ ;

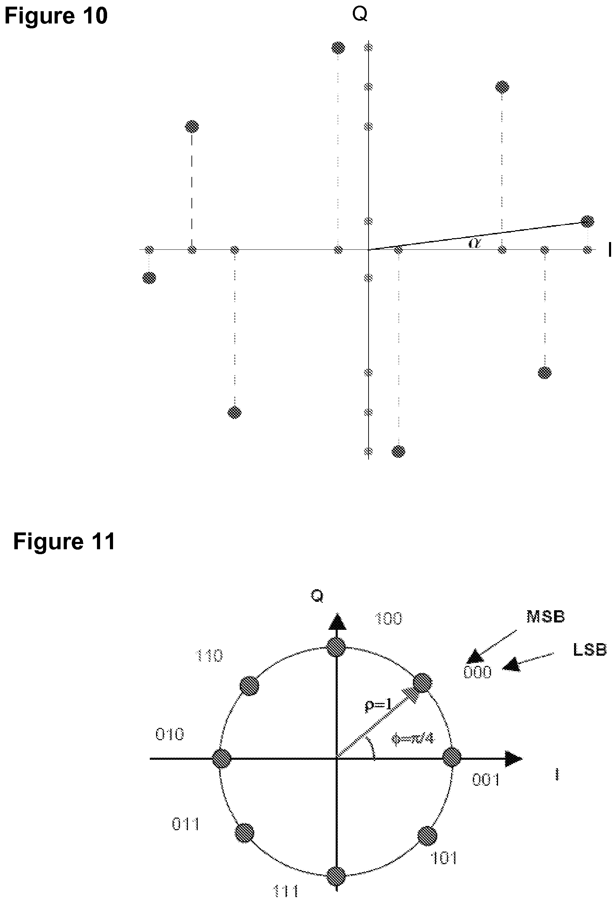

- la figure 10 illustre un exemple de constellation 8PSK avec un angle de rotation $\alpha$ = 7,9° par rapport à l'axe I ;
- la figure 11 présente un exemple de constellation pour une modulation de type 8PSK ;

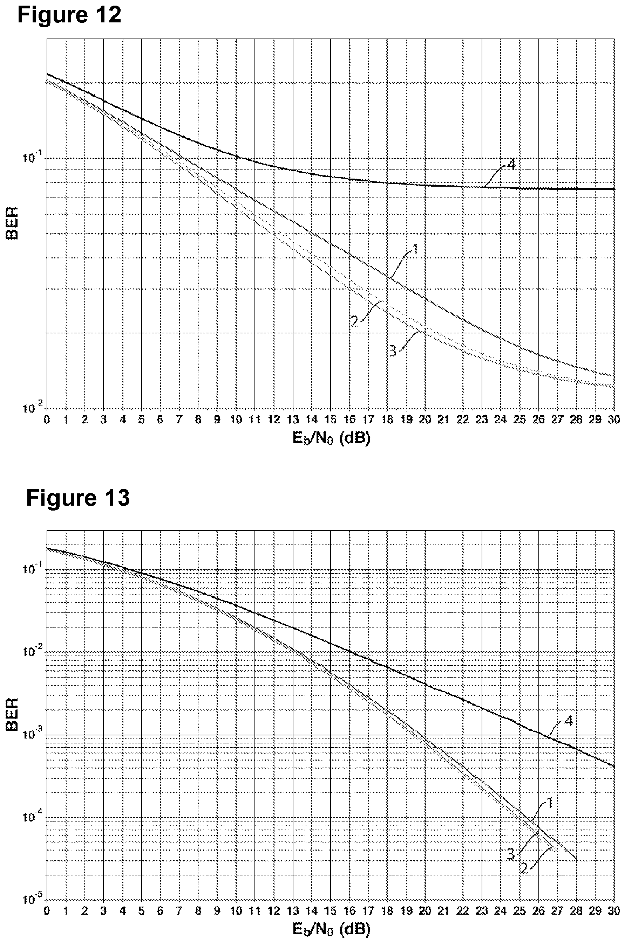

- les figures 12 et 13 présentent différentes courbes de taux d'erreurs binaires en sortie d'un démappeur 8PSK, et pour différentes valeurs d'angles de rotation $\alpha$, et respectivement pour une transmission sur canal de Rayleigh avec 15% d'effacements et pour une transmission sur canal de Rayleigh sans effacement, correspondant à :

  - courbe 1 : borne inférieure de la plage d'angle retenue ;
  - courbe 2 : valeur d'angle correspondant au pic de $d_{min}1D$ ;
  - courbe 3 : angle de compromis retenu ;
  - courbe 4 : art antérieur ;

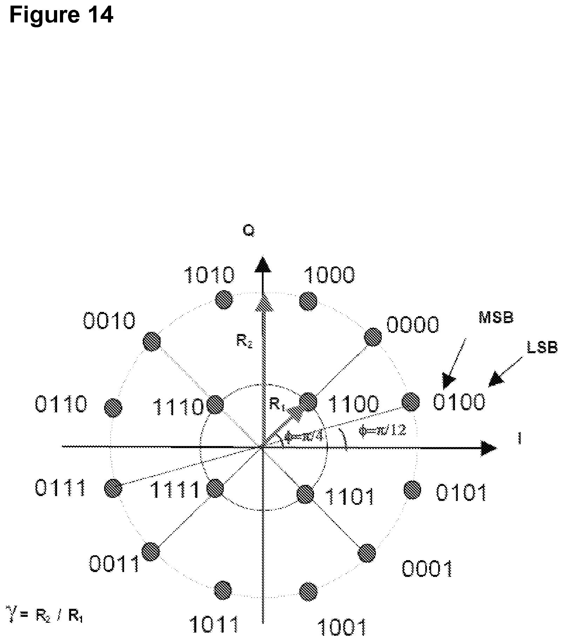

- la figure 14 présente un exemple de constellation pour une modulation de type 16-APSK ;

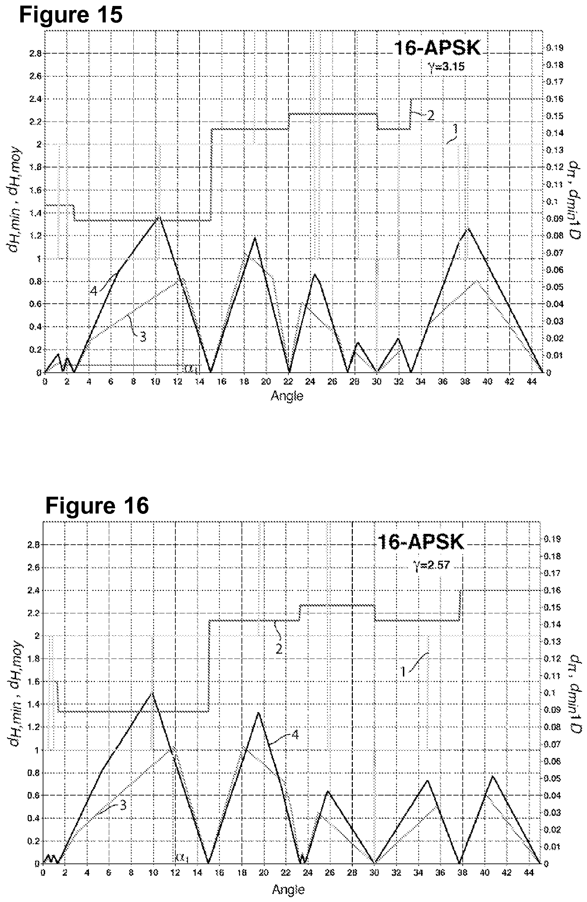

- les figures 15 et 16 présentent différentes courbes de mesures de distances sur la constellation 16APSK, pour des valeurs d'angles comprises entre 0° et 45°, et respectivement pour $\gamma$ = 3,15 et $\gamma$ = 2,57, correspondant à :

  - courbe 1 : nombre de bits différents, ou distance de Hamming, $d_{H,min}$, entre les points projetés situés à la distance euclidienne minimale unidimensionnelle $d_{min}1D$ ;
  - courbe 2 : nombre moyen de bits différents, ou distance de Hamming moyenne, $d_{H,moy}$, entre deux points voisins après projection sur une composante ;
  - courbe 3 : distance produit minimale, $d_\Pi$, entre deux points quelconques de la constellation ;
  - courbe 4 : distance euclidienne minimale unidimensionnelle $d_{min}1D$, entre deux points quelconques de la constellation après projection des points sur une des deux composantes, $I$ ou $Q$ ;

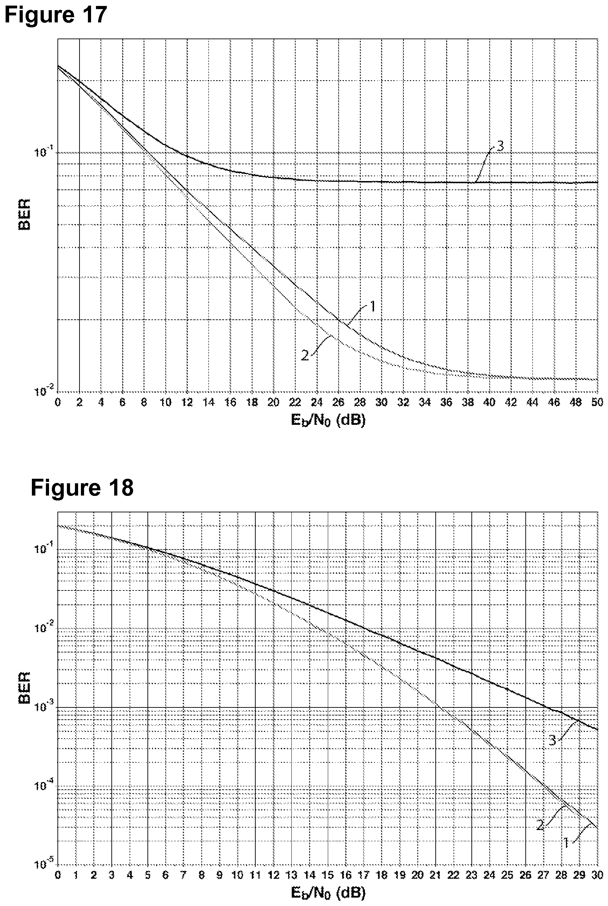

- les figures 17 et 18 présentent différentes courbes de taux d'erreurs binaires en sortie du démappeur 16PSK, avec $\gamma$ = 3,15, pour différentes valeurs d'angles de rotation $\alpha$, et respectivement pour une transmission sur canal de Rayleigh avec 15% d'effacements et pour une transmission sur canal de Rayleigh sans effacement, correspondant à :

  - courbe 1 : borne supérieure de la plage d'angle retenue ;
  - courbe 2 : valeur d'angle correspondant au pic de $d_{min}1D$ ;
  - courbe 3 : art antérieur ;

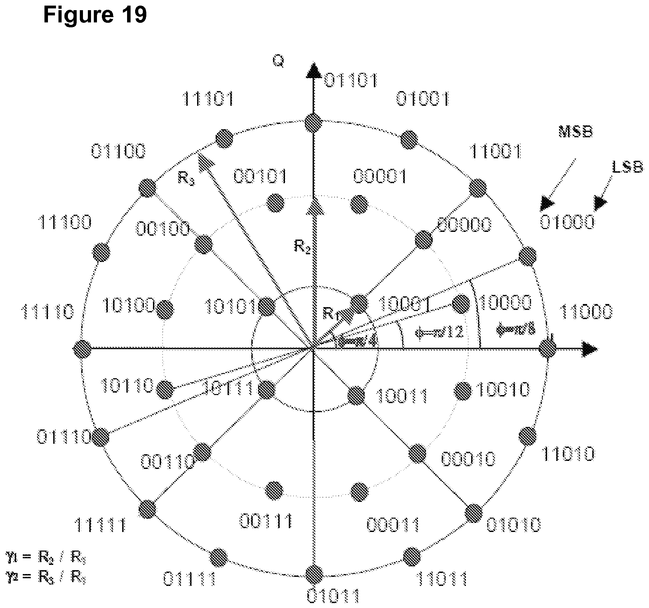

- la figure 19 présente un exemple de constellation pour une modulation de type 32-APSK ;

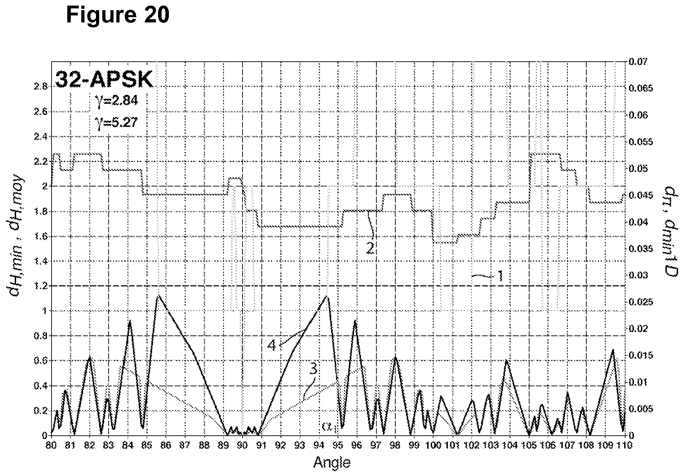

- la figure 20 présente différentes courbes de mesures de distances sur la constellation 32-APSK, pour des valeurs d'angles comprises entre 0° et 180°, et pour $\gamma1 = 2,84$ et $\gamma2 = 5,27$, correspondant à :

  - courbe 1 : nombre de bits différents, ou distance de Hamming, $d_{H,min}$, entre les points projetés situés à la distance euclidienne minimale unidimensionnelle $d_{min}1D$ ;
  - courbe 2 : nombre moyen de bits différents, ou distance de Hamming moyenne, $d_{H,moy}$, entre deux points voisins après projection sur une composante ;
  - courbe 3 : distance produit minimale, $d_{\Pi}$, entre deux points quelconques de la constellation ;
  - courbe 4 : distance euclidienne minimale unidimensionnelle $d_{min}1D$, entre deux points quelconques de la constellation après projection des points sur une des deux composantes, $I$ ou $Q$.

## 6. Description d'un mode de réalisation de l'invention

### 6.1 Principe général

L'invention s'applique à la transmission de signaux numériques, notamment via des canaux de transmission de type non gaussien. Notamment, l'invention peut s'appliquer avantageusement à la transmission de signaux numériques d'images, par exemple selon les normes DVB-T2 ou DVB-S2, et aux futurs standards qui en découleront.

Le principe général de l'invention repose sur la détermination expérimentale d'une valeur d'angle de rotation à appliquer à la constellation de modulation, en fonction d'un certain nombre de critères prédéterminés, de façon à optimiser les performances de la modulation.

La détermination de la valeur d'angle peut se décomposer en deux phases, la première délivrant une ou plusieurs plages de valeurs d'angle, et la deuxième permettant de sélectionner au moins une valeur dans cette ou ces plages.

L'invention repose également sur l'application d'un entrelacement de l'une des deux composantes I ou Q par rapport à l'autre. Dans un mode de réalisation particulier de l'invention, cet entrelacement correspond à l'application d'un retard entre les composantes I et Q de la constellation tournée (c'est-à-dire après l'application de la rotation précitée).

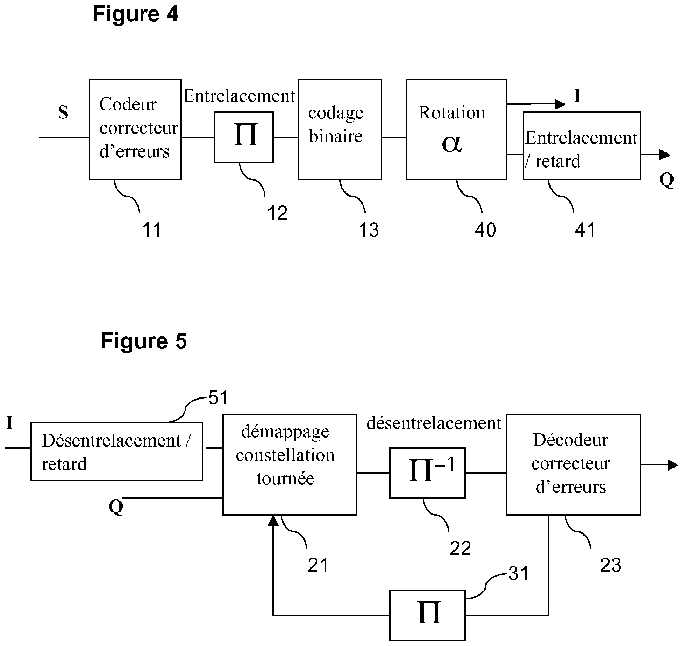

Le principe de l'invention est illustré en figure 4, sur laquelle apparaissent notamment les blocs 40 d'application d'une rotation d'un angle $\alpha$ et 41 d'application d'un retard entre les composantes I et Q. Ces deux aspects de l'invention sont décrits plus précisément ci-dessous en relation avec un mode de réalisation.

### 6.2 Description d'un mode de réalisation

6.2.1 Canaux à évanouissements

Dans le cas d'un modulateur classique (par exemple un modulateur QAM pour DVB-T2), par exemple tel que décrit en préambule, le signal transmis à l'instant n, noté $x_n$, est multiplié par un coefficient d'atténuation. Le signal reçu à l'instant n s'écrit :

$$y_n = \rho_n x_n + b_n = \rho_n(x_n^I + jx_n^Q) + (b_n^I + jb_n^Q)$$

où $b_n^I$ et $b_n^Q$ désignent deux variables gaussiennes indépendantes, et $\rho_n$ est une modélisation de l'atténuation.

Dans le cas du procédé de transmission selon un mode de réalisation de l'invention, l'application d'une rotation et d'un retard (ou d'un entrelacement), impliquent que les deux composantes de $x_n$ ne sont pas soumises à la même atténuation. Le signal reçu à l'instant n à l'entrée de la fonction de démappage s'écrit sous la forme :

$$y_n = \rho_n^I x_n^I + j\rho_n^Q x_n^Q + (b_n^I + jb_n^Q)$$

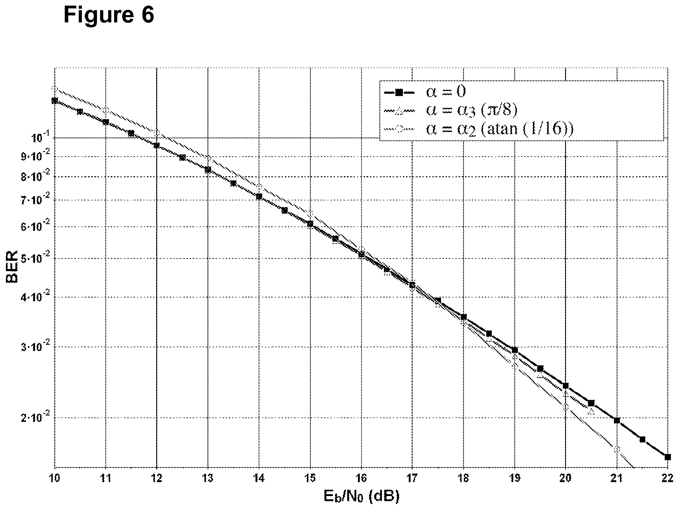

Ceci entraîne une modification des performances de la fonction de démappage par rapport au schéma classique, comme illustré par la figure 6, qui montre sur un exemple les courbes de taux d'erreurs binaires en sortie de la fonction de démappage d'une modulation de type 256-QAM pour un schéma classique tel qu'illustré en figure 3, et dans le cas d'un mappage selon l'invention (avec rotation de constellation et retard entre les composantes I et Q), pour deux valeurs d'angles $\pi/8$ et atan(1/16).

La littérature propose un critère de détermination de l'angle « optimal » par des calculs de bornes sur le taux d'erreurs binaires en sortie de la fonction de démappage. On montre, dans le document « J. Boutros, E. Viterbo, C. Rastello, and J.-C. Belfiore, "Good lattice constellations for both Rayleigh fading and Gaussian channels", IEEE Trans. on Information Theory, Vol. 42, n° 2, pp. 502 - 518, March 1996 », que le taux d'erreurs asymptotique en sortie de la fonction de démappage est minimal si la distance produit minimale $d_\Pi$ entre 2 points quelconques de la constellation est maximale :

$$d_\Pi = \min_{(X,Y)\in C} \left( |X_I - Y_I| \times |X_Q - Y_Q| \right)$$

où : X et Y représentent deux symboles distincts quelconques de la constellation C et $X_I$, $X_Q$, $Y_I$ et $Y_Q$ désignent leurs projections respectives sur les composantes en phase I et en quadrature Q.

Le résultat du calcul de la distance $d_\Pi$ pour la modulation de type 64-QAM est illustré en figure 7 (courbe 3).

On observe que pour les modulations QAM d'ordre inférieur ou égal à 1024, $d_\Pi$ est maximale pour l'angle $\alpha_1$ ≈ 31,7°. C'est la première valeur d'angle que l'on trouve dans la littérature.

Pour les modulations QAM d'ordres 16, 64 et 256 (et jusqu'à 4096), en observant les pics dans les courbes, on peut trouver une seconde valeur d'angle, $\alpha_2$ = 22,5° ($\pi$/8 rad) correspondant à un maximum local de $d_\Pi$. C'est la seconde valeur d'angle que l'on trouve dans la littérature, et notamment dans le document « X. Giraud, E. Boutillon, and J.-C. Belfiore "Algebraic tools to build modulation schemes for fading channels", IEEE Trans. on Information Theory, Vol. 43, n° 3, pp. 938 - 952, May 1997 ». Cette valeur d'angle a également été utilisée dans le système de modulation codée présenté dans « C. Abdel Nour, C. Douillard "On Lowering the error floor of high-order turbo BICM schemes over fading channels", GLOBECOM'06 : 49th IEEE Global Telecommunications conference, Nov-Dec, San Francisco, CA, USA, 2006 ».

Suivant la modulation, l'un ou l'autre de ces deux valeurs théoriques permet de minimiser le taux d'erreurs asymptotique, c'est-à-dire pour les très fortes valeurs de rapports signal à bruit (la partie basse de la courbe de taux d'erreurs).

Cependant, en pratique, on observe que pour des taux d'erreurs binaires élevés, c'est-à-dire ceux que l'on observe en entrée du décodeur correcteur d'erreurs (typiquement entre $10^{-2}$ et $10^{-1}$), ces valeurs d'angles théoriques ne conduisent pas nécessairement aux meilleures performances et peuvent les dégrader par rapport à un schéma de mappage/démappage classique.

En pratique, lorsque l'on diminue la valeur de $d_\Pi$ en changeant la valeur de l'angle $\alpha$, les performances à forts taux d'erreurs sont améliorées par rapport à $\alpha = \alpha_1$ ou $\alpha = \alpha_2$, mais en contrepartie, les performances asymptotiques sont dégradées.

Plus généralement, le choix de l'angle « optimal » pour les canaux de transmission à évanouissements dépend du rapport signal à bruit (« SNR ») sur le canal.

De plus, lorsque du codage correcteur d'erreurs est inséré dans la chaîne, le point de fonctionnement optimal du démappage dépend du code utilisé, du rendement de codage, mais aussi de la taille des trames transmises.

Il s'avère alors intéressant de proposer une plage d'angles de rotation plutôt qu'un angle fixé, comme présenté ci-dessous, dans le cas de canaux à évanouissements et à effacements.

*6.2.2 Canaux gaussiens à effacements*

Dans certaines conditions de transmission « sévères », des phénomènes d'évanouissement, ou d'atténuation, profonds apparaissent. Ces phénomènes peuvent être assimilables à des effacements, c'est-à-dire à une perte totale du signal. Ces canaux sont appelés canaux à effacements.

Dans le cas de ces canaux de transmission, les signaux transmis peuvent être effacés avec une probabilité *Pe*. Il est à noter que cette probabilité d'effacement fixe une limite supérieure au rendement du codage du code utilisé, qui ne peut être supérieur à 1/*Pe.*

Selon l'invention, l'application de la rotation à la constellation de modulation permet aux composantes I et Q relatives à un symbole de modulation de contenir toutes les deux l'ensemble des informations du symbole.

De plus, l'application du retard entre les voies I et Q permet au signal effectivement transmis sur le canal de contenir des informations relatives à deux symboles de modulation différents et, vice versa, les informations relatives à chaque symbole de la modulation sont présentes dans deux signaux transmis différents.

Ainsi, lorsqu'un signal est effacé, deux symboles en sont affectés mais une seule composante de chaque symbole est perdue. La composante restante peut alors est utilisée pour récupérer toute l'information.

L'application d'un retard, dans ce mode de réalisation particulier de l'invention, correspond à une forme simplifiée d'entrelacement. Il est bien entendu qu'un entrelacement aurait donc les mêmes effets sur les signaux transmis.

Dans le cas d'un canal gaussien sans effacement, les performances d'une modulation selon l'invention, telle qu'illustrée en figure 3, sont liées notamment aux deux paramètres suivants :

- le mappage, c'est-à-dire le codage binaire des points de la constellation, qui doit être le plus proche possible d'un mappage de Gray (dans lequel les codages binaires de deux points voisins de la constellation ne diffèrent que par un bit). Le mappage est surtout important pour les performances à forts et moyens taux d'erreurs ;
- la distance euclidienne minimale entre deux points de la constellation, qui doit être maximisée. Ce critère de distance influe essentiellement sur les performances à faible taux d'erreurs.

Dans le cas d'un canal gaussien avec effacements, le calcul de distance devient unidimensionnel, c'est-à-dire qu'on ne prend en compte que la projection des symboles sur la composante restante, $I$ ou $Q$.

Il en va de même pour le mappage.

Dans ce cas, il faut que le mappage sur chacune des composantes I et Q soit le plus proche possible d'un mappage de Gray. Il faut également maximiser la distance euclidienne minimale « 1-D », notée $d_{min}1D$, mesurée entre la projection de deux points sur une composante. Le résultat du calcul de cette distance $d_{min}1D$ pour la modulation 64-QAM est illustré en figure 7.

Pour les modulations de type QAM, on peut montrer que la valeur maximale de $d_{min}1D$ est obtenue pour une distribution uniforme des symboles projetés sur chaque axe. Cette distribution uniforme est obtenue pour une rotation d'angle $\alpha_3 = \mathrm{atan}\left(\dfrac{1}{2^{m/2}}\right)$, où m désigne le nombre de bits par symbole pour la modulation considérée. En pratique, cette valeur d'angle correspond à un mappage très proche du mappage de Gray.

Dans le cas de la modulation 64-QAM, $\alpha_3 = \mathrm{atan}\left(\dfrac{1}{8}\right) \approx 7{,}1°$.

On observe par simulation que cette valeur d'angle conduit effectivement aux meilleures performances en terme de taux d'erreurs sur ce type de canaux, mais pas dans le cas des canaux à évanouissements.

On présente maintenant le cas des canaux à évanouissements et effacements.

*6.2.3 Canaux à évanouissements avec effacements*

L'invention propose de déterminer une valeur d'angle optimale dans le cas de canaux à évanouissements avec effacements, de manière expérimentale, et non théorique comme les techniques de l'art antérieur.

Selon l'invention, la détermination d'une valeur d'angle s'effectue en deux phases, une première délivrant une plage de valeurs d'angles, à partir d'au moins un premier critère, et une deuxième phase permettant de sélectionner une valeur d'angle, dans cette ou ces plages de valeurs issues de la première phase, à partir d'au moins un second critère, distinct du ou des premiers critères. L'ordre de prise en compte des critères est interchangeable, selon les modes de réalisation, comme le montrent les exemples ci-après.

En d'autres termes, il est possible d'effectuer la première phase en tenant compte d'un critère visant à satisfaire la condition selon laquelle ledit mappage projeté sur chaque composante I et Q est proche d'un mappage de Gray, pour chaque point dudit mappage projeté, ou d'un critère tenant compte des valeurs de la distance produit minimale entre deux points dudit mappage projeté et/ou de la distance euclidienne minimale entre deux projections sur l'une ou l'autre des composantes I ou Q desdits deux points, notée distance euclidienne minimale unidimensionnelle. La seconde phase tiendra compte du critère non utilisé par la première phase, parmi les deux critères listés ci-dessus.

Il est à noter que, dans le cas des modulations de type QAM, pour des raisons de symétrie, la détermination d'une valeur d'angle peut se faire entre 0° et 45°, comme précisé ci-dessous dans la description d'un exemple d'application.

On présente ces deux phases, en relation avec la figure 8, selon ce mode de réalisation de l'invention, pour une modulation de type QAM.

La première phase 81 est basée sur le mappage des points projetés sur chaque composante (I et Q). En effet, afin de minimiser le taux d'erreurs binaires en sortie de la fonction de démappage, il est intéressant d'avoir un mappage sur chacune des composantes I et Q qui soit le plus proche possible d'un mappage de Gray.

Pour cela, les deux grandeurs suivantes sont étudiées et minimisées :

- le nombre moyen de bits différents, ou distance de Hamming, $d_{H,min}$, entre deux points voisins sur une composante (courbe 2 sur la figure 7) ;
- le nombre de bits différents, ou distance de Hamming, $d_{H,min}$, entre deux points situés à la distance de $d_{min}1D$ sur

une composante (courbe 1 sur la figure 7).

Les plages d'angles correspondant à des valeurs faibles de ces grandeurs permettent d'obtenir de bonnes performances de la fonction de démappage à forts et moyens taux d'erreurs.

La deuxième phase 82 est destinée à affiner les plages d'angles déterminées à l'issue de la phase 81. Elle est basée sur l'analyse des propriétés de la distance $d_\Pi$ (déjà décrite précédemment), qui donne une information sur les performances à faible taux d'erreurs du démappage dans le cas de canaux à évanouissements.

Dans cette phase 82, on ne conserve que les angles qui se comportent mieux asymptotiquement sur les canaux à évanouissements que l'angle optimal pour les canaux à effacements, à savoir $\alpha_3 = \mathrm{atan}\left(\dfrac{1}{2^{m/2}}\right)$. Autrement dit, on ne retient que les angles vérifiant $d_\Pi(\alpha) \geq d_\Pi\left(\mathrm{atan}\left(\dfrac{1}{2^{m/2}}\right)\right)$.

L'ensemble des angles obtenus à l'issue de la deuxième phase 82 sont admissibles en pratique.

Néanmoins, les valeurs d'angles correspondant aux valeurs de $d_\Pi$ les plus faibles (en pratique les angles les plus proches de $\alpha_3 = \mathrm{atan}\left(\dfrac{1}{2^{m/2}}\right)$ et de 45° pour certaines modulations d'ordre élevé telle que la 256-QAM) conviennent à la transmission sur des canaux avec de forts taux d'effacements tandis que les valeurs d'angles correspondant aux valeurs de $d_\Pi$ les plus fortes seront à préférer lorsque le taux d'effacement sera faible, voire nul.

Ainsi, le choix final de l'angle $\alpha$ pour une application donnée dépend de plusieurs facteurs :

- du taux d'effacements sur le canal de transmission, comme expliqué précédemment ;
- du mappage : pour un ensemble d'angles avec les mêmes propriétés de distance, on choisira de préférence ceux correspondant à un mappage sur chaque composante le plus proche possible d'un mappage de Gray. Cette condition est particulièrement importante si l'on n'utilise pas de démodulation itérative en réception. Si un récepteur à démodulation itérative est utilisé, cette contrainte peut être quelque peu relaxée car la démodulation itérative permet alors en général de récupérer la perte de performance engendrée par le mappage.

Les propriétés de la distance $d_{min}1D$ peuvent également être prises en compte. Cette distance donne une information sur le comportement à faible taux d'erreurs vis à vis des effacements.

Il est à noter que plus on augmente l'ordre de la modulation et plus l'influence de $d_{min}1D$ est importante à des taux d'erreurs élevés.

Ainsi, à titre d'exemple, la valeur de $d_{min}1D$ est plus importante pour une modulation de type 256-QAM que pour une modulation de type 16-QAM.

Pour un ensemble d'angles avec les mêmes propriétés de mappage et de distance $d_\Pi$, on retiendra de préférence les angles correspondant à la valeur de $d_{min}1D$ la plus élevée.

La validation finale de l'angle est réalisée à partir du tracé de la courbe de taux d'erreurs binaire en sortie de la fonction de démappage et de sa comparaison par rapport au cas d'une modulation codée BICM classique (sans rotation et sans décalage). Il s'agit de vérifier que le point de croisement entre les deux courbes se situe à un rapport signal à bruit inférieur au point de fonctionnement du code correcteur d'erreurs utilisé.

A titre d'exemple, sur la figure 6, la courbe correspondant à l'angle de rotation $\pi/8$ croise la courbe du démappage classique à environ 17 dB. Ceci implique qu'un gain en performance avec cet angle n'est possible que si le point de fonctionnement du décodeur est supérieur à 17 dB (en prenant en compte l'addition du facteur correctif - 10log $R$ lié au rendement de codage R).

Dans le cas des modulations de type PSK et A-PSK, la distance euclidienne 1D ($d_{min}1D$), la distance produit 2D ($d_\Pi$) et les grandeurs relatives au mappage sont également utilisées pour déterminer l'angle optimal.

Cependant, ces différentes mesures sont dépendantes de la géométrie de la constellation dans l'espace des signaux. En particulier, dans le cas des constellations PSK, un certain nombre de contraintes d'origine géométrique sont dues au fait que tous les points sont situés sur un même cercle.

Ainsi, lors de la première phase 81, seule la première grandeur, encore appelée distance de Hamming moyenne et notée $d_{H,moy}$, est utilisée afin de déterminer des plages d'angles.

Toujours dans le cas des modulations de type PSK et A-PSK, la deuxième phase 82 est également basée sur l'analyse des propriétés de la distance $d_\Pi$ (déjà décrite précédemment), qui donne une information sur les performances à faible taux d'erreurs du démappage dans le cas de canaux à évanouissements.

De plus, dans cette phase 82, on ne conserve que les angles qui vérifient $d_{min}1D(\alpha) \geq d_{min}1D(\alpha_1)$, où $\alpha_1$ est

l'angle correspondant au pic le plus proche de $d_\Pi$.

Contrairement aux modulations QAM, l'angle qui maximise $d_{min}1D$ n'a pas de propriété particulière d'un point de vue géométrique pour la 8PSK et les 16APSK.

En effet, dans le cas d'une constellation MPSK avec M ≥ 8, les angles qui maximisent $d_{min}1D$ (7,9° et 37,1° modulo 45°, comme illustré en figure 9) ne correspondent pas à une distribution uniforme des symboles projetés (comme illustré sur la figure 10, qui présente un exemple de constellation 8PSK avec un angle de rotation $\alpha$ = 7,9° par rapport à l'axe I, cet angle correspondant à une maximisation de $d_{min}1D$, des points projetés sur I ou Q).

Par exemple, pour une modulation de type 8PSK, il n'existe pas d'angle de rotation conduisant à une distribution uniforme des symboles projetés. Ceci est également vrai pour les modulations de type APSK dont les points sont situés sur plusieurs cercles concentriques.

De plus, pour les modulations de type QAM, les considérations de symétrie permettent de ramener l'étude des angles sur l'intervalle [0,45°]. Pour les MPSK (M ≥ 8) et les APSK, ces considérations de symétries ne sont pas toujours valides. On observe bien une répétition ou une symétrie des motifs de distance produit $d_\Pi$ et de distance minimale unidimensionnelle $d_{min}1D$ pour les angles multiples de 45°, mais ceci n'est pas vrai, en général, pour les grandeurs relatives au mappage.

Différents exemples d'application pour les modulations de type QAM, PSK et APSK sont décrits plus en détails ci-dessous.

### 6.3 Exemples d'application

Dans le cas d'une modulation de type 64-QAM (figure 7), la première phase 81 permet de retenir la plage d'angle suivante : $\alpha$ < 11,3° dans l'intervalle [0°-45°].

Par des considérations de symétrie, on peut limiter la recherche de l'angle à l'intervalle [0°,45°]. Ainsi, si un angle $\alpha$ dans cet intervalle répond au problème, il peut être remplacé par n'importe lequel des 7 angles suivants :

$$\frac{\pi}{2}-\alpha \; , \quad \frac{\pi}{2}+\alpha \; , \; \pi-\alpha, \; \pi+\alpha, \; \frac{3\pi}{2}-\alpha \; , \quad \frac{3\pi}{2}+\alpha \; \text{ et } 2\pi-\alpha.$$

La deuxième phase 82 permet de sélectionner les valeurs d'angle correspondant à une distance

$$d_\Pi(\alpha) \geq d_\Pi\left( atan\left(\frac{1}{8}\right) \approx 7,1° \right). \text{ Les angles retenus appartiennent aux plages [7,1°-7,9°], [8,3°-9,2°] ou [9,7°-11,0°].}$$

Le choix d'une valeur d'angle de compromis permettant de considérer une large gamme de taux d'effacements (typiquement de 0 à 15%) et une large gamme de rendements de codage correspond au pic de $d_{min}1D$ dans l'intervalle [8,3°-9,2°], à savoir $\alpha$ compris entre 8,6° et 8,7°.

Dans le cas d'une modulation de type 16-QAM, les résultats des deux phases de détermination d'une valeur d'angle sont les suivants :

Phase 1 : $\alpha \leq 18,5°$

Phase 2 : $d_\Pi(\alpha) \geq d_\Pi\left( atan\left(\frac{1}{4}\right) \approx 14,1° \right) => \alpha \in [14,1°-17,1°]$

Le choix final pour un angle de compromis permettant de considérer une large gamme de taux d'effacements (typiquement de 0 à 15%) et une large gamme de rendements de codage correspond au pic de $d_\Pi$ dans l'intervalle [14,1°-17,1°], à savoir $\alpha$ = 16,8° . Dans le cas de la 16-QAM, la distance $d_{min}1D$ n'a pas été prise en compte car son influence ne se fait sentir que pour les très faibles taux d'erreurs.

Dans le cas d'une modulation de type 256-QAM, les résultats des deux phases de détermination d'une valeur d'angle sont les suivants :

Phase 1 : $\alpha \leq 5,1°$ ou $\alpha \geq 42,6°$

Phase 2 : $d_\Pi(\alpha) \geq d_\Pi\left( atan\left(\frac{1}{16}\right) \approx 3,5° \right) => \alpha \in [3,5°-3,7°]$ ou $[3,9°-4,0°]$ ou $[4,2°-4,3°]$ ou $[4,5°-5,1°]$ ou $[42,8°-43,2°]$.

La valeur finale représentant un bon compromis pour les différents taux d'effacements et rendements de codage correspond au pic local de $d_\Pi$ et $d_{min}1D$ dans l'intervalle [4,2°-4,3°] à savoir $\alpha$ = 4,2° .

Dans le cas d'une modulation de type QPSK ou 4-QAM, la première phase n'est pas applicable. En effet, le nombre moyen de bits différents entre deux points voisins sur une composante est invariable dans l'intervalle [0°-45°]. Le résultat de la deuxième phase de détermination d'une plage d'angles est le suivant :

$$\text{Phase 2}: d_{\Pi}(\alpha) \geq d_{\Pi}\left(\text{atan}\left(\frac{1}{2}\right) \approx 26,5°\right) => \alpha \in [26,5°\text{-}33,2°]$$

Le choix final pour un angle de compromis permettant de considérer une large gamme de taux d'effacements et une large gamme de rendements de codage correspond à un compromis entre la valeur de $d_{\Pi}$ et $d_{min}1D$ à savoir $\alpha$ = 29,0° . Cette valeur permet notamment d'atteindre des gains plus importants quand un processus de démodulation itérative est utilisée au récepteur.

L'invention peut également s'appliquer notamment aux modulations de type MPSK, avec M≥8, et APSK.

Dans ces cas, les considérations de symétrie permettent de ramener l'étude des angles sur l'intervalle [0°-90°] pour la modulation 8PSK, l'intervalle [0°-45°] pour la modulation 16APSK, et l'intervalle [0°-180°] pour la modulation 32APSK, pour les constellations utilisant un mappage de Gray.

Par exemple, pour la modulation 8PSK, on ne peut pas étudier l'angle sur l'intervalle plus restreint [0-45°] car le mappage des points de la constellation est construit de telle façon que le nombre moyen de bits différents (c'est-à-dire la distance de Hamming moyenne $d_{H,moy}$) entre deux points voisins de la constellation après projection n'est pas le même sur l'intervalle [0°-45°] et sur l'intervalle [45°-90°], comme illustré sur la figure 9.

On considère maintenant le cas d'une modulation de type 8PSK telle qu'illustrée en figure 11. La constellation choisie pour cet exemple correspond à celle adoptée dans le standard DVB-S2 (norme version 2 pour la transmission satellite).

Selon cet exemple d'application, la première phase 81 permet de retenir la plage d'angle pour laquelle la distance de Hamming moyenne $d_{H,moy}$, est faible, soit inférieure à 2 , c'est-à-dire pour $\alpha \geq 45°$ dans l'intervalle [0°-90°].

Par des considérations de symétrie, on peut limiter la recherche de l'angle à l'intervalle [0°-90°]. Si un angle $\alpha$ de cet intervalle répond au problème, il peut être remplacé par n'importe lequel des 3 angles suivants : $\alpha + \frac{\pi}{2}$ , $\alpha + \pi$

ou $\alpha + \frac{3\pi}{2}$ .

Pour garantir un bon comportement à faible taux d'erreurs sur les canaux à évanouissements et à effacements, il ne faut conserver que les angles correspondant à des valeurs des distances $d_{\Pi}$ et $d_{min}1D$ suffisamment élevées. Les valeurs de distances admissibles dépendent en pratique du taux d'effacement sur le canal (plus le taux d'effacement est élevé, plus il faut favoriser la distance $d_{min}1D$ par rapport à la distance $d_{\Pi}$).

Cependant, en raison des contraintes géométriques liées au placement de l'ensemble des points sur un même cercle dans le cas de la modulation de type 8PSK, le cas de la distribution uniforme sur un axe n'existe pas et les régions de pics de $d_{min}1D$ et de $d_{\Pi}$ ne coïncident pas (comme illustré en figure 9), contrairement au cas des modulations de type QAM.

La deuxième phase 82 permet de sélectionner les valeurs d'angle correspondant à une distance $d_{min}1D(\alpha) \geq d_{min}1D(\alpha_1)$, où $\alpha_1$ est l'angle correspondant au pic le plus proche de $d_{\Pi}$, à savoir $\alpha_1$ = 49,9°.

En raison des propriétés de symétrie des distances $d_{min}1D$ et $d_{\Pi}$ par rapport aux angles $k\frac{\pi}{8}$ (et donc, dans l'intervalle [45°-90°], par rapport à l'angle ( $\frac{3\pi}{8}$ )=67,5°), on obtient deux plages d'angles : 49,9°≤$\alpha$≤58,5° et 76,5°≤$\alpha$≤85,1°.

Le choix d'une valeur d'angle de compromis conduisant à de bonnes performances, aussi bien pour des transmissions sur des canaux à évanouissements sans effacement que sur des canaux à évanouissements avec effacements, et ce pour une large plage de taux d'effacements, correspond à une valeur $d_{H,min}$ faible, soit $\alpha \geq 52,9°$ dans la plage [49,9°-58,5°] ou $\alpha \leq 82,1°$ dans la plage [76,5°-85,1°].

Pour une transmission sur canal à évanouissements avec 15% d'effacements (comme illustré en figure 12), la valeur d'angle qui minimise le taux d'erreurs en sortie du démappeur est située :

- pour la plage [49,9°-58,5°], environ à mi-chemin entre le pic de $d_{min}1D$ (52,9°) et la limite supérieure de la plage, soit numériquement $\alpha \approx 55,7°$ ;
- par symétrie, on obtient dans la plage [76,5°-85,1°], $\alpha \approx 79,3°$.

La simulation du démappeur pour les mêmes angles de rotation dans le cas d'une transmission sur canal de Rayleigh sans effacement (comme illustré en figure 13) montre que l'angle retenu conduit également à de bonnes performances sur ce type de canal et justifie le choix de cette valeur comme angle de compromis.

Si la constellation considérée est différente de la constellation correspondant à celle adoptée dans le standard DVB-S2 (illustrée en figure 11), et notamment si le déphasage à l'origine ou si le *mappage* est différent (sachant qu'un changement de *mappage* peut être vu comme un déphasage à l'origine, multiple de 45°), les valeurs numériques des plages d'angles sont différentes de celles obtenues précédemment.

A titre d'exemple, si le déphasage à l'origine $\phi$ est inférieur à 45° par rapport à la constellation de la figure 11, les valeurs d'angles $\alpha$ obtenues précédemment deviennent $(\alpha - \phi)\mod\frac{\pi}{2}$.

On considère maintenant le cas d'une modulation de type 16-APSK, dont la constellation est illustrée en figure 14 et correspond à celle adoptée dans le standard DVB-S2.

On considère $\gamma$ le rapport des rayons R1 et R2. Dans le cas de la constellation DVB-S2, ce paramètre, dont la valeur peut varier, dépend du rendement de codage choisi.

Le calcul des différentes mesures de distances relatives au mappage et à la distance euclidienne minimale entre deux points de la constellation pour les deux valeurs extrêmes de $\gamma$ (2,57 et 3,15) adoptées dans le standard conduit aux courbes des figures 15 et 16.

Pour le cas où $\gamma = 3,15$, la première phase 81 permet de retenir la plage d'angle pour laquelle la distance Hamming moyenne $d_{H,moy}$, est faible, soit inférieure à 1,4 , c'est-à-dire la plage suivante : $2,7° \le \alpha \le 15,0°$.

Par des considérations de symétrie, on peut limiter la recherche de l'angle à l'intervalle [0°-45°]. Si un angle $\alpha$ de cet intervalle répond au problème, il peut être remplacé par n'importe lequel des 7 angles suivants : $\frac{\pi}{2}-\alpha$, $\frac{\pi}{2}+\alpha$, $\pi - \alpha$, $\pi + \alpha$, $\frac{3\pi}{2}-\alpha$, $\frac{3\pi}{2}+\alpha$, $2\pi - \alpha$.

La deuxième phase 82 permet de sélectionner les valeurs d'angle correspondant à une distance $d_{min}1D(\alpha)\ge d_{min}1D(\alpha_1)$, où $\alpha_1$ est l'angle correspondant au pic le plus proche de $d_{Th}$, soit $6,0°\le\alpha\le12,5°$.

Le choix d'une valeur d'angle de compromis conduisant à de bonnes performances, aussi bien pour des transmissions sur des canaux à évanouissements sans effacement que sur des canaux à évanouissements avec effacements, et ce pour une large plage de taux d'effacements, correspond à une valeur $d_{H,min}$ faible, soit $\alpha \le 10,3°$ dans la plage [6,0°-12,5°].

Pour une transmission sur canal à évanouissements avec 15% d'effacements (comme illustré en figure 17) et sans effacement (comme illustré en figure 18), la valeur d'angle qui minimise le taux d'erreurs en sortie du démappeur est $\alpha \approx 10,3°$.

Pour le cas où $\gamma = 2,57$, la première phase 81 permet de retenir la plage d'angle pour laquelle la distance Hamming moyenne $d_{H,moy}$, est faible, soit inférieure à 1,4 , c'est-à-dire la plage suivante : $1,4° \le \alpha \le 15,0°$.

La deuxième phase 82 permet de sélectionner les valeurs d'angle correspondant à une distance $d_{min}1D(\alpha)\ge d_{min}1D(\alpha_1)$, où $\alpha_1$ est l'angle correspondant au pic le plus proche de $d_{Th}$, soit $6,0°\le\alpha\le11,9°$.

Le choix d'une valeur d'angle de compromis conduisant à de bonnes performances, aussi bien pour des transmissions sur des canaux à évanouissements sans effacement que sur des canaux à évanouissements avec effacements, et ce pour une large plage de taux d'effacements, correspond à une valeur $d_{H,min}$ faible, soit $\alpha \le 9,9°$ dans la plage [6,0°-11,9°].

Pour une transmission sur canal à évanouissements avec 15% d'effacements et sans effacement, la valeur d'angle qui minimise le taux d'erreurs en sortie du démappeur est $\alpha \approx 9,9°$.

Les deux valeurs des rapports de cercles $\gamma$ traitées correspondent aux deux valeurs extrêmes de $\gamma$ dans le cas du standard DVB-S2.

Pour les valeurs intermédiaires, les courbes sont similaires à celles des figures 15 et 16, avec des valeurs d'angles intermédiaires entres les deux cas extrêmes traités.

Par conséquent, il est possible de proposer une plage d'angles commune, valable pour toutes les valeurs $\gamma$ du standard, en prenant l'intersection des deux plages retenues, soit $6,0°\le\alpha\le11,9°$.

De même, toute valeur d'angle comprise entre 9,9° et 10,3° convient comme angle de compromis pour l'ensemble des cas.

On considère à présent le cas d'une modulation de type 32-APSK, dont la constellation est illustrée en figure 19 et correspond à celle adoptée dans le standard DVB-S2.

On considère $\gamma_1$ = R2/R1 et $\gamma_2$ = R3/R1, des paramètres dont la valeur peut varier et qui dépendent, dans le cas de la constellation DVB-S2, du rendement de codage choisi.

Le calcul des différentes mesures de distances relatives au *mappage* et à la distance euclidienne minimale entre deux points de la constellation pour les cas particuliers où $\gamma_1$ = 2,84 et $\gamma_2$ = 5,27 conduit aux courbes de la figure 20.

Pour ces valeurs de $\gamma_1$ = 2,84 et $\gamma_2$ = 5,27, la première phase 81 permet de retenir les plages d'angles suivantes, pour lesquelles la distance Hamming moyenne $d_{H,moy}$, est faible, soit inférieure à 1,8 : 10,0°$\leq\alpha\leq$13,2° , 90,8°$\leq\alpha\leq$95,2° et 100,0°$\leq\alpha\leq$103,2°.

Par des considérations de symétrie, on peut limiter la recherche de l'angle à l'intervalle [0°-180°]. Si un angle $\alpha$ de cet intervalle répond au problème, il peut être remplacé par $\pi + \alpha$.

La deuxième phase 82 permet de sélectionner les valeurs d'angle correspondant à une distance $d_{min}1D(\alpha)\geq d_{min}1D(\alpha_1)$, où $\alpha_1$ = 95,0° est l'angle correspondant au pic le plus haut de $d_\Pi$ sur l'ensemble des plages d'angles sélectionnées, soit 91,7°$\leq\alpha\leq$95,0°.

Le choix d'une valeur d'angle de compromis conduisant à de bonnes performances, aussi bien pour des transmissions sur des canaux à évanouissements sans effacement que sur des canaux à évanouissements avec effacements, et ce pour une large plage de taux d'effacements, correspond à une valeur $d_{H,min}$ faible, soit $\alpha \leq$ 94,4° dans la plage [91,7°-95,0°].

Pour une transmission sur canal à évanouissements avec 15% d'effacements et sans effacement, la valeur d'angle qui minimise le taux d'erreurs en sortie du démappeur est $\alpha \approx$ 94,4°.

Il est à noter que pour des valeurs différentes de $\gamma_1$ et $\gamma_2$, l'allure des courbes diffère de celles de la figure 20, mais les phases 81 et 82 du procédé selon l'invention permettent d'obtenir une valeur d'angle de compromis.

On présente maintenant un exemple de réalisation de l'invention, pour une modulation 64-QAM, dans lequel les phases 81 et 82 utilisent respectivement le critère basé sur les distances $d_\Pi$ et $d_{min}1D$ *pour la phase 81, puis* le critère qui porte sur la distance de Hamming moyenne, $d_{H,moy}$ et/ou la distance de Hamming, $d_{H,min}$, *pour la phase 82.*

*La première phase 81 permet de r*etenir les angles qui vérifient $d_\Pi(\alpha) \geq d_\Pi\left(\text{atan}\left(\dfrac{1}{2^{m/2}}\right)\right)$ , et plus particulièrement ceux avec la valeur de $d_{min}1D$ la plus élevée.

On obtient ainsi les angles appartenant aux plages suivantes : [7,l°-7,9°], [8,3°-9,2°], [9,7°-11,0°], [11,6°-13,6°], [14,5°-15,8°],[16,1°-17,7°], [19,2°-21,5°], [22,1°-23,1°], [23,4°-25,2°], [28,0°-29,6°], [29,9°-30,7°], [31,2°-33,1°], [34,3°-35,4°], [35,7°-36,5°], [37,2°-38,4°], [38,9°-39,6°], [40,0°-40,5°], [40,7°-41,5°].

Par des considérations de symétrie, on peut limiter la recherche de l'angle à l'intervalle [0°-45°]. Ainsi, si un angle $\alpha$ dans cet intervalle répond au problème, il peut être remplacé par n'importe lequel des 7 angles suivants :

$$\frac{\pi}{2} - \alpha \;,\quad \frac{\pi}{2} + \alpha \;,\quad \pi - \alpha,\; \pi + \alpha,\quad \frac{3\pi}{2} - \alpha \;,\quad \frac{3\pi}{2} + \alpha \;\text{ et } 2\pi - \alpha.$$

La deuxième phase 82 permet de retenir la plage d'angle $\alpha <$ 11,3° dans l'intervalle [0°-45°], en appliquant le critère qui porte sur distance de Hamming moyenne, $d_{H,moy}$ et/ou la distance de Hamming, $d_{H,min}$.

Les angles retenus appartiennent aux plages [7,1°-7,9°], [8,3°-9,2°] ou [9,7°-11,0°]. Bien sûr, les plages d'angles résultantes sont identiques dans le cas où l'ordre d'application des critères est inversé.

Ces exemples d'application sont présentés à titre illustratif et non limitatif.

La valeur d'angle déterminée permet d'appliquer une rotation à la constellation de modulation, et ainsi d'optimiser les performances de celle-ci.

Dans certains contextes de transmission, la valeur d'angle peut être variable, notamment en fonction du canal de transmission.

Par exemple, la valeur de l'angle peut être recalculée en cas de changement de la qualité de transmission, par exemple suite à la détection d'une dégradation du canal, ou d'une amélioration de celui-ci, afin d'adapter l'optimisation de la modulation.

Un retard est ensuite appliqué à la constellation tournée, lors de l'étape 41. Ce retard a pour rôle de séparer les deux composantes I et Q d'un même point de la constellation, de façon à ce que ces composantes ne soient pas affectées par le même facteur d'atténuation, ou pas effacées en même temps.

Dans le cas où les atténuations affectant deux signaux transmis consécutivement ne sont pas corrélées (canal de transmission noté « uncorrelated flat fading »), un retard d'un temps symbole entre la composante I et la composante Q est suffisant.

Le retard peut être appliqué à l'une ou l'autre des deux composantes.

Dans le cas d'un canal de transmission où les atténuations sont corrélées (canal de transmission noté « correlated flat fading »), le retard doit être au moins aussi long que la longueur de corrélation sur le canal, de façon à s'assurer que les atténuations affectant les composantes I et Q d'un même symbole soient décorrélées.

On peut également remplacer le retard par un entrelacement, le retard étant une forme simplifiée d'entrelacement.

### 6.4 Description d'un récepteur

On décrit maintenant, en relation avec la figure 5, un récepteur apte à recevoir un signal transmis par le procédé de transmission selon l'invention.

Un tel récepteur comprend notamment, par rapport à un récepteur classique de type BICM (déjà décrit en relation avec la figure 3), un module d'application d'un retard inverse 51 (ou d'un entrelacement inverse, si un entrelacement a été appliquée à l'émission) à celui appliqué avant la transmission, selon le procédé de transmission de l'invention.

Le démappage 21 de la constellation s'applique à la constellation tournée reçue.

Une boucle d'itération 31 peut également être mise en oeuvre, de façon à améliorer les performances.

## Revendications

1. **Procédé** de transmission d'un signal représentatif d'un signal source, destiné à être transmis via un canal de transmission, comprenant les étapes suivantes :

   - application d'un code correcteur d'erreurs sur ledit signal source, délivrant un signal numérique intermédiaire ;
   - entrelacement des bits dudit signal numérique intermédiaire, délivrant un signal entrelacé ;
   - application d'un codage binaire de signal, noté mappage, sur ledit signal entrelacé, délivrant le signal à transmettre, mettant en oeuvre une constellation de modulation comprenant des composantes I et Q,
   - application d'un entrelacement d'une desdites composantes I ou Q par rapport à l'autre,

   **caractérisé en ce qu'**il comprend, avant ladite étape d'application d'un entrelacement, une étape d'application d'une rotation à ladite constellation de modulation, délivrant un mappage de la projection de la constellation tournée, dit mappage projeté, ladite rotation étant mise en oeuvre selon un angle dont la valeur est définie selon les deux phases suivantes :

   - une première phase de détermination d'au moins une plage de valeurs d'angle, de façon que ledit mappage projeté sur chaque composante I et Q soit proche d'un mappage de Gray, pour chaque point dudit mappage projeté ;
   - une deuxième phase de sélection d'au moins une valeur dans la ou lesdites plages, en fonction des valeurs de la distance produit minimale entre deux points dudit mappage projeté et/ou de la distance euclidienne minimale entre deux projections sur l'une ou l'autre des composantes I ou Q desdits deux points, notée distance euclidienne minimale unidimensionnelle.,

2. Procédé de modulation selon la revendication 1, **caractérisé en ce que** ladite première phase minimise, sur une composante dudit mappage projeté, un nombre moyen de bits différents entre deux points voisins dudit mappage projeté et/ou un nombre de bits différents entre deux points dudit mappage projeté situés à ladite distante distance euclidienne minimale.

3. Procédé de modulation selon l'une quelconque des revendications 1 à 2, **caractérisé en ce que** ladite seconde phase écarte au moins un angle minimisant ladite distance euclidienne minimale et/ou ladite distance produit.

4. Procédé de modulation selon l'une quelconque des revendications 1 à 3, **caractérisé en ce que** la valeur dudit angle tient compte également d'au moins un critère appartenant au groupe comprenant :

   - le code correcteur d'erreurs utilisé ;
   - la modulation utilisée ;
   - le canal de transmission ;
   - le codage binaire de signal utilisé ;
   - le rendement de codage ;
   - la taille des trames du signal transmis ;
   - la constellation choisie pour la modulation utilisée.

5. Procédé de modulation selon l'une quelconque des revendications 1 à 4 **caractérisé en ce que** ladite modulation appartient au groupe comprenant :

- les modulations de type QAM ;
- les modulations de type PSK ;
- les modulations de type APSK.

**6.** Procédé de modulation selon l'une quelconque des revendications 1 à 5, **caractérisé en ce que** ladite valeur de l'angle est comprise entre 14,1° et 17,1°, lorsque la modulation utilisée est de type 16 QAM.

**7.** Procédé de modulation selon l'une quelconque des revendications 1 à 5, **caractérisé en ce que** ladite valeur de l'angle appartient à l'une desdites plages de valeurs :

- [7,1°-7,9°] ;
- [8,3°-9,2°] ;
- [9,7°-11,0°],

lorsque la modulation utilisée est de type 64 QAM.

**8.** Procédé de modulation selon l'une quelconque des revendications 1 à 5, **caractérisé en ce que** ladite valeur de l'angle appartient à l'une desdites plages de valeurs :

- [3,5°-3,7°] ;
- [3,9°-4,0°] ;
- [4,2°-4,3°] ;
- [4,5'-5,1'] ;
- [42,8°-43,2°],

lorsque la modulation utilisée est de type 256 QAM.

**9.** Procédé de modulation selon l'une quelconque des revendications 1 à 5, **caractérisé en ce que** ladite valeur de l'angle est comprise entre 26,5° et 33,2°, lorsque la modulation utilisée est de type QPSK.

**10.** Procédé de modulation selon l'une quelconque des revendications 1 à 5, **caractérisé en ce que** ladite valeur de l'angle appartient à l'une desdites plages de valeurs :

- [49,9°-58,5°] ;
- [76,5°-85,l°],

lorsque la modulation utilisée est de type 8PSK.

**11.** Procédé de modulation selon l'une quelconque des revendications 1 à 5, **caractérisé en ce que** ladite valeur de l'angle appartient à l'une desdites plages de valeurs :

- [6,0°-12,5°] pour $\gamma$=3,15 ;
- [6,0°-11,9°] pour $\gamma$=2,57, où ledit paramètre $\gamma$ dépend du rendement de codage choisi,

lorsque la modulation utilisée est de type 16-APSK.

**12.** Procédé de modulation selon l'une quelconque des revendications 1 à 5, **caractérisé en ce que** ladite valeur de l'angle appartient à la plage de valeurs [91,7°-95,0°], où lesdits paramètres $\gamma$1 et $\gamma$2 dépendent du rendement de codage choisi et sont respectivement égaux à 2,84 et 5,27, lorsque la modulation utilisée est de type 32-APSK.

**13.** Procédé de modulation selon l'une quelconque des revendications 1 à 12, **caractérisé en ce que** ledit code correcteur d'erreurs appartient au groupe comprenant :

- un code LDPC ;
- un turbocode ;
- un code à décodage itératif.

**14.** **Dispositif** de transmission d'un signal représentatif d'un signal source, destiné à être transmis via un canal de transmission, comprenant :

- des moyens d'application d'un code correcteur d'erreurs sur ledit signal source, délivrant un signal numérique intermédiaire ;
- des moyens d'entrelacement des bits dudit signal numérique intermédiaire, délivrant un signal entrelacé ;
- des moyens d'application d'un codage binaire de signal, noté mappage, sur ledit signal entrelacé, délivrant le signal à transmettre, mettant en oeuvre une constellation de modulation comprenant des composantes I et Q,
- des moyens d'application d'un entrelacement d'une desdites composantes I ou Q par rapport à l'autre,

**caractérisé en ce qu'**il comprend des moyens d'application d'une rotation à ladite constellation de modulation, délivrant un mappage projeté, ladite rotation étant mise en oeuvre selon un angle dont la valeur est définie selon les deux phases suivantes :

- des premiers moyens de détermination d'au moins une plage de valeurs d'angle, de façon que ledit mappage projeté sur chaque composante I et Q soit proche d'un mappage de Gray, pour chaque point dudit mappage projeté ;
- des deuxièmes moyens de sélection d'au moins une valeur dans la ou lesdites plages, en fonction des valeurs de la distance produit minimale entre deux points dudit mappage et/ou de la distance euclidienne minimale entre deux projections sur l'une ou l'autre des composantes I ou Q desdits deux points, notée distance euclidienne minimale unidimensionnelle.

15. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de transmission selon l'une au moins des revendications 1 à 13.

16. Procédé de réception d'un signal transmis via un canal de transmission, comprenant les étapes suivantes :

- lorsqu'un retard (41) a été appliqué, selon la revendication 1, sur l'une des composantes I ou Q par rapport à l'autre, application d'un retard (51), dit retard inverse, sur la composante I ou Q sur laquelle ledit retard (41) n'a pas été appliqué en transmission ;
- lorsqu'un entrelacement (41) a été appliqué, selon la revendication 1, sur l'une des composantes I ou Q par rapport à l'autre, application d'un désentrelacement (51), dit désentrelacement inverse, sur la composante I ou Q sur laquelle ledit entrelacement (41) a été appliqué en transmission ;
- application d'un démappage (21) de ladite constellation tournée délivrée par ladite étape d'application d'une rotation à ladite constellation de modulation selon la revendication 1 ;
- application d'un désentrelacement (22) des bits du signal, inverse audit entrelacement (12) selon la revendication 1 ;
- application d'un décodage correcteur d'erreurs (23) correspondant audit code correcteur d'erreurs (11) selon la revendication 1.

17. Dispositif de réception d'un signal transmis via un canal de transmission, comprenant les moyens suivants :

- lorsqu'un retard (41) a été appliqué, par le dispositif de transmission selon la revendication 14, sur l'une des composantes I ou Q par rapport à l'autre, des moyens d'application d'un retard (51), dit retard inverse, sur la composante I ou Q sur laquelle ledit retard (41) n'a pas été appliqué en transmission ;
- lorsqu'un entrelacement (41) a été appliqué, par le dispositif de transmission selon la revendication 14, sur l'une des composantes I ou Q par rapport à l'autre, des moyens d'application d'un désentrelacement (51), dit désentrelacement inverse, sur la composante I ou Q sur laquelle ledit entrelacement (41) a été appliqué en transmission ;
- des moyens d'application d'un démappage (21) de ladite constellation tournée délivrée par lesdits moyens d'application d'une rotation à ladite constellation de modulation du dispositif de transmission selon la revendication 14 ;
- des moyens d'application d'un désentrelacement (22) des bits du signal, inverse audit entrelacement (12) appliqué par les moyens du dispositif de transmission selon la revendication 14 ;
- des moyens d'application d'un décodage correcteur d'erreurs (23) correspondant audit code correcteur d'erreurs (11) appliqué par les moyens du dispositif de transmission selon la revendication 14.

**18.** Système de transmission, **caractérisé en ce qu'**il comprend au moins un dispositif de transmission selon la revendication 14 et au moins un dispositif de réception selon la revendication 17.

**Patentansprüche**

**1.** Verfahren zur Übertragung eines für ein Quellensignal repräsentativen Signals, das dazu bestimmt ist, über einen Übertragungskanal übertragen zu werden, das die folgenden Schritte enthält:

- Anwendung eines Fehlerkorrekturcodes an das Quellensignal, die ein digitales Zwischensignal liefert;
- Verschachtelung der Bits des digitalen Zwischensignals, die ein verschachteltes Signal liefert;
- Anwendung einer binären Signalcodierung, Mapping genannt, an das verschachtelte Signal, die das zu übertragende Signal liefert, unter Verwendung einer Modulationskonstellation, die Komponenten I und Q enthält,
- Anwendung einer Verschachtelung einer der Komponenten I oder Q bezüglich der anderen,

**dadurch gekennzeichnet, dass** es vor dem Schritt der Anwendung einer Verschachtelung einen Schritt der Anwendung einer Rotation an die Modulationskonstellation enthält, die ein Mapping der Projektion der gedrehten Konstellation liefert, projiziertes Mapping genannt, wobei die Rotation gemäß einem Winkel durchgeführt wird, dessen Wert gemäß den zwei folgenden Phasen definiert wird:

- eine erste Phase der Bestimmung mindestens eines Winkelwertebereichs, damit das auf jede Komponente I und Q projizierte Mapping nahe einem Gray-Mapping ist, für jeden Punkt des projizierten Mappings;
- eine zweite Phase der Auswahl mindestens eines Werts in dem Bereich oder den Bereichen, abhängig von den Werten des minimalen Produkt-Abstands zwischen zwei Punkten des projizierten Mappings und/oder des minimalen euklidisches Abstands zwischen zwei Projektionen auf die eine oder andere der Komponenten I oder Q der zwei Punkte, eindimensionaler minimaler euklidischer Abstand genannt.

**2.** Modulationsverfahren nach Anspruch 1, **dadurch gekennzeichnet, dass** die erste Phase an einer Komponente des projizierten Mappings eine mittlere Anzahl von unterschiedlichen Bits zwischen zwei benachbarten Punkten des projizierten Mappings und/oder eine Anzahl von unterschiedlichen Bits zwischen zwei Punkten des projizierten Mappings minimiert, die sich im fernen minimalen euklidischen Abstand befinden.

**3.** Modulationsverfahren nach einem der Ansprüche 1 bis 2, **dadurch gekennzeichnet, dass** die zweite Phase mindestens einen Winkel entfernt, der den minimalen euklidische Abstand und/oder den Produkt-Abstand minimiert.

**4.** Modulationsverfahren nach einem der Ansprüche 1 bis 3, **dadurch gekennzeichnet, dass** der Wert des Winkels ebenfalls mindestens ein Kriterium berücksichtigt, das zu der Gruppe gehört, die enthält:

- den verwendeten Fehlerkorrekturcode;
- die verwendete Modulation;
- den Übertragungskanal;
- die verwendete binäre Signalcodierung;
- den Codierwirkungsgrad;
- die Größe der Rahmen des übertragenen Signals;
- die für die verwendete Modulation gewählte Konstellation.

**5.** Modulationsverfahren nach einem der Ansprüche 1 bis 4, **dadurch gekennzeichnet, dass** die Modulation zu der Gruppe gehört, die enthält:

- die Modulationen des Typs QAM;
- die Modulationen des Typs PSK;
- die Modulationen des Typs APSK.

**6.** Modulationsverfahren nach einem der Ansprüche 1 bis 5, **dadurch gekennzeichnet, dass** der Wert des Winkels zwischen 14,1° und 17,1° liegt, wenn die verwendete Modulation vom Typ 16 QAM ist.

**7.** Modulationsverfahren nach einem der Ansprüche 1 bis 5, **dadurch gekennzeichnet, dass** der Wert des Winkels zu einem der Wertebereiche gehört:

- [7,1°-7,9°]
- [8,3°-9,2°]
- [9,7°-11,0°]

wenn die verwendete Modulation vom Typ 64 QAM ist.

8. Modulationsverfahren nach einem der Ansprüche 1 bis 5, **dadurch gekennzeichnet, dass** der Wert des Winkels zu einem der Wertebereiche gehört:

- [3,5°-3,7°]
- [3,9°-4,0°]
- [4,2°-4,3°]
- [4,5°-5,1°]
- [42,8°-43,2°]

wenn die verwendete Modulation vom Typ 256 QAM ist.

9. Modulationsverfahren nach einem der Ansprüche 1 bis 5, **dadurch gekennzeichnet, dass** der Wert des Winkels zwischen 26,5° und 33,2° liegt, wenn der verwendete Modulation vom Typ QPSK ist.

10. Modulationsverfahren nach einem der Ansprüche 1 bis 5, **dadurch gekennzeichnet, dass** der Wert des Winkels zu einem der Wertebereiche gehört:

- [49,9°-58,5°];
- [76,5°-85,1°],

wenn die verwendete Modulation vom Typ 8PSK ist.

11. Modulationsverfahren nach einem der Ansprüche 1 bis 5, **dadurch gekennzeichnet, dass** der Wert des Winkels zu einem der Wertebereiche gehört:

- [6,0°-12,5°] für $\gamma$=3,15;
- [6,0°-11,9°] für $\gamma$=2,57, wobei der Parameter $\gamma$ vom gewählten Codierwirkungsgrad abhängt,

wenn die verwendete Modulation vom Typ 16-APSK ist.

12. Modulationsverfahren nach einem der Ansprüche 1 bis 5, **dadurch gekennzeichnet, dass** der Wert des Winkels zum Wertebereich [91,7°-95,0°] gehört, wobei die Parameter $\gamma$1 und $\gamma$2 vom gewählten Codierwirkungsgrad abhängen und je gleich 2,84 und 5,27 sind, wenn die verwendete Modulation vom Typ 32-APSK ist.

13. Modulationsverfahren nach einem der Ansprüche 1 bis 12, **dadurch gekennzeichnet, dass** der Fehlerkorrekturcode zu der Gruppe gehört, die enthält:

- einen LDPC-Code;
- einen Turbo-Code;
- einen Code mit iterativer Decodierung.

14. Übertragungsvorrichtung eines für ein Quellensignal repräsentativen Signals, das dazu bestimmt ist, über einen Übertragungskanal übertragen zu werden, die enthält:

- Einrichtungen zur Anwendung eines Fehlerkorrekturcodes an das Quellensignal, die ein digitales Zwischensignal liefert;
- Einrichtungen zur Verschachtelung der Bits des digitalen Zwischensignals, die ein verschachteltes Signal liefert;
- Einrichtungen zur Anwendung einer binären Signalcodierung, Mapping genannt, an das verschachtelte Signal, die das zu übertragende Signal liefert, unter Verwendung einer Modulationskonstellation, die Komponenten I und Q enthält,
- Einrichtungen zur Anwendung einer Verschachtelung einer der Komponenten I oder Q bezüglich der anderen,

**dadurch gekennzeichnet, dass** sie Einrichtungen zur Anwendung einer Rotation an die Modulationskonstellation enthält, die ein projiziertes Mapping liefert, wobei die Rotation gemäß einem Winkel durchgeführt wird, dessen Wert gemäß den zwei folgenden Phasen definiert wird:

- erste Einrichtungen zur Bestimmung mindestens eines Winkelwertebereichs, damit das auf jede Komponente I und Q projizierte Mapping einem Gray-Mapping nahe ist, für jeden Punkt des projizierten Mappings;
- zweite Einrichtungen zur Auswahl mindestens eines Werts in dem Bereich oder den Bereichen, abhängig von den Werten des minimalen Produkt-Abstands zwischen zwei Punkten des Mappings und/oder des minimalen euklidischen Abstands zwischen zwei Projektionen auf die eine oder andere der Komponenten I oder Q der zwei Punkte, eindimensionaler minimaler euklidischer Abstand genannt.

15. Computerprogrammprodukt, das von einem Kommunikationsnetz heruntergeladen und/oder auf einem computerlesbaren Träger aufgezeichnet und/oder von einem Prozessor ausgeführt werden kann, **dadurch gekennzeichnet, dass** es Programmcodeanweisungen zur Durchführung des Übertragungsverfahrens nach mindestens einem der Ansprüche 1 bis 13 enthält.

16. Verfahren zum Empfang eines über einen Übertragungskanal übertragenen Signals, das die folgenden Schritte enthält:

- wenn eine Verzögerung (41) nach Anspruch 1 an eine der Komponenten I oder Q bezüglich der anderen angewendet wurde, Anwendung einer Verzögerung (51), umgekehrte Verzögerung genannt, an die Komponente I oder Q, an die die Verzögerung (41) bei der Übertragung nicht angewendet wurde;
- wenn eine Verschachtelung (41) nach Anspruch 1 an eine der Komponenten I oder Q bezüglich der anderen angewendet wurde, Anwendung einer Entschachtelung (51), umgekehrte Entschachtelung genannt, an die Komponente I oder Q, an die die Verschachtelung (41) bei der Übertragung angewendet wurde;
- Anwendung eines Demappings (21) der gedrehten Konstellation, die von dem Schritt der Anwendung einer Rotation an die Modulationskonstellation nach Anspruch 1 geliefert wird;
- Anwendung einer Entschachtelung (22) der Bits des Signals, umgekehrt zur Verschachtelung (12) nach Anspruch 1;
- Anwendung einer Fehlerkorrekturdecodierung (23) entsprechend dem Fehlerkorrekturcode (11) nach Anspruch 1.

17. Empfangsvorrichtung eines Signals, das über einen Übertragungskanal übertragen wird, die die folgenden Einrichtungen enthält:

- wenn eine Verzögerung (41) durch die Übertragungsvorrichtung nach Anspruch 14 an eine der Komponenten I oder Q bezüglich der anderen angewendet wurde, Einrichtungen zur Anwendung einer Verzögerung (51), umgekehrte Verzögerung genannt, an die Komponente I oder Q, an die die Verzögerung (41) bei der Übertragung nicht angewendet wurde;
- wenn eine Verschachtelung (41) durch die Übertragungsvorrichtung nach Anspruch 14 an eine der Komponenten I oder Q bezüglich der anderen angewendet wurde, Einrichtungen zur Anwendung einer Entschachtelung (51), umgekehrte Entschachtelung genannt, an die Komponente I oder Q, an die die Verschachtelung (41) bei der Übertragung angewendet wurde;
- Einrichtungen zur Anwendung eines Demapping (21) der gedrehten Konstellation, die von den Einrichtungen zur Anwendung einer Rotation an die Modulationskonstellation der Übertragungsvorrichtung nach Anspruch 14 geliefert wird;
- Einrichtungen zur Anwendung einer Entschachtelung (22) der Bits des Signals, umgekehrt zur Verschachtelung (12), die von den Einrichtungen der Übertragungsvorrichtung nach Anspruch 14 angewendet wird;
- Einrichtungen zur Anwendung einer Fehlerkorrekturdecodierung (23) entsprechend dem Fehlerkorrekturcode (11), der von den Einrichtungen der Übertragungsvorrichtung nach Anspruch 14 angewendet wird.

18. Übertragungssystem, **dadurch gekennzeichnet, dass** es mindestens eine Übertragungsvorrichtung nach Anspruch 14 und mindestens eine Empfangsvorrichtung nach Anspruch 17 enthält.

**Claims**

1. Method for transmitting a signal representing a source signal, intended to be transmitted via a transmission channel, comprising the following steps:

- applying an error correction code to said source signal, delivering an intermediate digital signal;
- interleaving bits of said intermediate digital signal, delivering an interleaved signal;
- applying a bit to signal mapping to said interleaved signal, delivering the signal to be transmitted, implementing a modulation constellation comprising components I and Q;
- applying an interleaving of one of said components I or Q with respect to the other;

**characterized in that** it comprises, prior to said step of applying an interleaving, a step of applying a rotation to said modulation constellation, delivering a mapping of the projection of the rotated constellation, called projected mapping, said rotation being implemented according to an angle of which the value is defined according to the following two phases:

- a first phase of determining at least one angle value range, so that said projected mapping on each component I and Q is close to a Gray mapping, for each point of said projected mapping;
- a second phase of selecting at least one value within said range(s), based on the minimum product distance values between two points of said projected mapping and/or the minimum Euclidean distance between two projections on one or the other of the components I or Q of said two points, called the minimum one-dimensional Euclidean distance.

2. Modulation method according to claim 1, **characterized in that** said first phase minimizes, on a component of said projected mapping, an average number of different bits between two neighboring points of said projected mapping and/or a number of different bits between two points of said projected mapping located at said distant minimum Euclidean distance.

3. Modulation method according to any one of claims 1 and 2, **characterized in that** said second phase excludes at least one angle minimizing said minimum Euclidean distance and/or said product distance.

4. Modulation method according to any one of claims 1 to 3, **characterized in that** the value of said angle also takes into account at least one criterion belonging to the group comprising:

- the error correction code used;
- the modulation used;
- the transmission channel;
- the bit to signal mapping used;
- the coding rate;
- the size of the signal frames transmitted;
- the constellation chosen for the modulation used.

5. Modulation Method according to any one of claims 1 to 4, **characterized in that** said modulation belongs to the group comprising:

- QAM modulations;
- PSK modulations;
- APSK modulations.

6. Modulation Method according to any one of claims 1 to 5, **characterized in that** said angle value is between 14.1° and 17.1°, when the modulation used is 16 QAM.

7. Modulation Method according to any one of claims 1 to 5, **characterized in that** said angle value belongs to one of said value ranges:

- [7.1°-7.9°] ;
- [8.3°-9.2°] ;
- [9.7°-11.0°] ;

when the modulation used is 64 QAM.

8. Modulation Method according to any one of claims 1 to 5, **characterized in that** said angle value belongs to one of said value ranges:

   - [3.5°-3.7°] ;
   - [3.9°-4.0°] ;
   - [4.2°-4.3°] ;
   - [4.5°-5.1°] ;
   - [42.8°-43.2°] ;

   when the modulation used is 256 QAM.

9. Modulation Method according to any one of claims 1 to 5, **characterized in that** said angle value is between 26.5° and 33.2°, when the modulation used is QPSK.

10. Modulation Method according to any one of claims 1 to 5, **characterized in that** said angle value belongs to one of said value ranges:

    - [49.9°-58.5°] ;
    - [76.5°-85.1°] ;

    when the modulation used is 8 PSK.

11. Modulation Method according to any one of claims 1 to 5, **characterized in that** said angle value belongs to one of said value ranges:

    - [6.0°-12.5°] for $\gamma$=3.15 ;
    - [6.0°-11.9°] for $\gamma$=2.57, in which said parameter $\gamma$ depends on the chosen coding rate,

    when the modulation used is 16-APSK.

12. Modulation Method according to any one of claims 1 to 5, **characterized in that** said angle value belongs to the value range [91.7°-95.0°], in which said parameters $\gamma 1$ and $\gamma 2$ depend on the chosen coding rate and are respectively equal to 2.84 and 5.27 when the modulation used is 32-APSK.

13. Modulation Method according to any one of claims 1 to 12, **characterized in that** said error correction code belongs to the group comprising:

    - an LDPC code;
    - a turbocode;
    - a code with iterative decoding.

14. Device for transmitting a signal representing a source signal, intended to be transmitted via a transmission channel, comprising:

    - means for applying an error correction code to said source signal, delivering an intermediate digital signal;
    - means for interleaving bits of said intermediate digital signal, delivering an interleaved signal;
    - means for applying a bit to signal mapping to said interleaved signal, delivering the signal to be transmitted, implementing a modulation constellation comprising components I and Q;
    - means for applying an interleaving of one of said components I or Q with respect to the other;

    **characterized in that** it comprises means for applying a rotation to said modulation constellation, in which said rotation is implemented according to an angle of which the value is defined according to the following two phases:

    - first means for determining at least one angle value range, so that said mapping onto each component I and Q is close to a Gray mapping, for each point of said projected mapping;
    - second means for selecting at least one value within said range(s), based on the minimum product distance values between two points of said projected mapping and/or the minimum Euclidean distance between two projections on one or the other of the components I or Q of said two points, called the minimum one-dimensional Euclidean distance.

15. Computer program downloadable from a communication network and/or recorded on a computer-readable medium and/or capable of being run by a processor, **characterized in that** it comprises program code instructions for implementing the transmission Method according to at least one of claims 1 to 13.

16. Method for receiving a signal transmitted via a transmission channel, comprising the following steps:

- when a delay (41) has been applied, according to claim 1, on one of the components I or Q with respect to the other, applying a delay (51), called inverse delay, to the component I or Q on which said delay (41) has not been applied in transmission;
- when an interleaving 41) has been applied, according to claim 1, on one of the components I or Q with respect to the other, applying a de-interleaving (51), called inverse de-interleaving, to the component I or Q on which said interleaving (41) has not been applied in transmission;
- applying a de-mapping (21) to said rotated constellation delivered by said step of applying of a rotation to said modulation constellation according to claim 1;
- applying a de-interleaving (22) of bits of the signal, inverse of the interleaving (12) according to claim 1;
- applying an error correction decoding (23) corresponding to the error correction code (11) according to claim 1.

17. Device for receiving a signal transmitted via a transmission channel, comprising the following means:

- when a delay (41) has been applied, by the transmission device of claim 14, on one of the components I or Q with respect to the other, means for applying a delay (51), called inverse delay, to the component I or Q on which said delay (41) has not been applied in transmission;
- when an interleaving 41) has been applied, by the transmission device of claim 14, on one of the components I or Q with respect to the other, means for applying a de-interleaving (51), called inverse de-interleaving, to the component I or Q on which said interleaving (41) has not been applied in transmission;
- means for applying a de-mapping (21) to said rotated constellation delivered by said means for applying of a rotation to said modulation constellation of the transmission device of claim 14;
- means for applying a de-interleaving (22) of bits of the signal, inverse of the interleaving (12) applied by the means of the transmission device according to claim 14;
- means for applying an error correction decoding (23) corresponding to the error correction code (11) applied by the means of the transmission device according to claim 14.

18. Transmission system, **characterized in that** it comprises at least one transmission device according to claim 14 and at least on reception device according to claim 17.

# Figure 1

S ⟶ **Codeur correcteur d'erreurs** ⟶ Entrelacement **Π** ⟶ **codage binaire (mappage)** ⟶ I, Q

11   12   13

# Figure 2

I, Q ⟶ **démappage** ⟶ désentrelacement **Π⁻¹** ⟶ **Décodeur correcteur d'erreurs** ⟶

21   22   23

# Figure 3

I, Q ⟶ **démappage** ⟶ désentrelacement **Π⁻¹** ⟶ **Décodeur correcteur d'erreurs** ⟶

21   22   31   23

**Π**

## Figure 4

```
        ┌──────────┐ Entrelacement ┌──────────┐ ┌──────────┐         I
  S     │ Codeur   │   ┌──────┐    │ codage   │ │ Rotation │  ──────▶
────────│ correcteur│──│  Π   │────│ binaire  │─│    α     │ ┌──────────────┐
        │ d'erreurs │   └──────┘    └──────────┘ └──────────┘ │Entrelacement │──────▶
        └──────────┘       │                         │       │ / retard     │    Q
             │            12                         40       └──────────────┘
             11                        13                          41
```

## Figure 5

```
                    ┌─51
   I  ┌──────────────┐   ┌──────────────┐ désentrelacement ┌──────────┐
  ────│Désentrelacement│──│  démappage   │   ┌──────┐      │ Décodeur │
      │ / retard      │   │ constellation │───│ Π⁻¹  │──────│correcteur│──────▶
      └──────────────┘   │   tournée     │   └──────┘      │ d'erreurs│
            Q  ──────────│              ▲│       │          └──────────┘
                          └──────────────┘      22              │  23
                                21                              31
                                         ┌──────┐
                                ─────────│  Π   │──────────────
                                         └──────┘
```

# Figure 6

# Figure 7

# Figure 8

# Figure 9

**Figure 10**

**Figure 11**

## Figure 12

## Figure 13

# Figure 14

## Figure 15

## Figure 16

## Figure 17

## Figure 18

# Figure 19

# Figure 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KIYANI N F et al.** *OFDM with BICM-ID and Rotated MPSK Constellations and Signal Space Diversity*
- **J. BOUTROS ; E. VITERBO ; C. RASTELLO ; J.-C. BELFIORE.** Good lattice constellations for both Rayleigh fading and Gaussian channels. *IEEE Trans. on Information Theory,* Mars 1996, vol. 42 (2), 502-518

- **X. GIRAUD ; E. BOUTILLON ; J.-C. BELFIORE.** Algebraic tools to build modulation schemes for fading channels. *IEEE Trans. on Information Theory,* Mai 1997, vol. 43, 938-952
- **C. ABDEL NOUR ; C. DOUILLARD.** On Lowering the error floor of high-order turbo BICM schemes over fading channels. *GLOBECOM'06 : 49th IEEE Global Telecommunications conference,* Novembre 2006